# EUROPÄISCHE PATENTSCHRIFT

(11) **EP 1 702 167 B1**
(45) Veröffentlichungstag und Bekanntmachung des Hinweises auf die Patenterteilung: **17.07.2019**
(21) Anmeldenummer: 04802998.7
(22) Anmeldetag: 22.12.2004
(51) Int. Cl.: F16F 15/134, F16F 15/131, F16F 15/139

(54) **ZWEIMASSENKUPPLUNGSSCHWUNGRAD UND KUPPLUNG**
DUAL-MASS CLUTCH FLYWHEEL AND CLUTCH
VOLANT D'INERTIE A DEUX MASSES D'UN EMBRAYAGE ET EMBRAYAGE

(30) Priorität: 26.12.2003 DE 10361605
(43) Veröffentlichungstag der Anmeldung: 20.09.2006
(60) Teilanmeldung: 06019409.9
(73) Patentinhaber: Rohs, Ulrich,, 52351 Düren (DE)
(72) Erfinder: ROHS, Ulrich, 52351 Düren (DE); DRÄGER, Christoph, 52459 Inden (DE); BRANDWITTE, Werner, 52379 Langerwehe (DE)
(74) Vertreter: Reuther, Martin
(86) Internationale Anmeldenummer: PCT/DE2004/002818
(87) Internationale Veröffentlichungsnummer: WO 2005/064198

(56) Entgegenhaltungen:
- EP-A- 0 421 965
- EP-A- 1 120 582
- DE-A1- 10 028 268
- GB-A- 2 358 692

## Beschreibung

Die Erfindung betrifft ein Zweimassenkupplungsschwungrad, welches um eine Hauptrotationsachse rotieren kann und zwei Massen sowie einen Torsionsschwingungsdämpfer umfasst, der in der Lage ist Rotationsschwingungen über eine zwischen den beiden Massen wirksame Feder-Dämpfer-Einrichtung zu dämpfen. Hierzu weist die Feder-Dämpfer-Einrichtung ein Federsystem und ein Dämpfersystem auf. In einem lastfreien Zustand können die beiden Massen in einer Leerlaufposition um die Hauptrotationsachse und in einem belastetem Zustand gegen die Feder-Dämpfer-Einrichtung um einen Relativwinkel relativ zueinander verdreht um die Hauptrotationsachse rotieren. Hierbei weist das Federsystem Federn auf, die über Niederhalter radial zur Hauptrotationsachse hin geführt sind, welche über einen Fliegerring miteinander verbunden sind, wobei der Fliegerring zumindest um einen kleinen Leerlaufrelativwinkel um die Leerlaufposition frei den Federn folgen kann.

Aus dem Stand der Technik ist eine Vielzahl an Zweimassenkupplungsschwungrädern bekannt, bei denen zwei Massen über einen Torsionsschwingungsdämpfer gekoppelt sind, dessen Federn über Gleitschuhe, die sich radial außen an einer Baugruppe einer der Massen abstützen, geführt werden. Ein Beispiel hierfür offenbart die DE 197 00 851 A1. Während die Reibung dieser Gleitschuhe an der entsprechenden Masse zu einer an sich gewünschten Dämpfung führt, ist diese jedoch stark drehzahlabhängig, was zu großen Abstimmungsproblemen führt, da derartige Zweimassenkupplungsschwungräder bei stark variierenden Drehzahlen betrieben werden. Aus diesem Grunde finden sich Zweimassenkupplungsschwungräder, bei denen die Gleitschuhe über einen Fliegerring miteinander verbunden sind, was beispielsweise die DE 100 28 268 A1 offenbart. Gleichwohl reiben die Gleitschuhe bzw. der Fliegerring nach wie vor an einer der beiden Massen, obschon eine Fliehkraftabhängigkeit durch den die Gleitschuhe verbindenden Fliegerring verhindert wird, so dass auch der Fliegerring, der mit den Gleitschuhen fest verbunden ist, entsprechend unmittelbar an dieser Masse reibt und nicht frei ist.

Einen freien Fliegerring hingegen offenbart die EP 0 421 965 A1, der an sich frei drehbar zwischen den beiden Massen gelagert ist und über Nasen jeweils in die Federn eingreift, die ihrerseits jedoch an einer der beiden Massen anliegen und mithin an dieser reiben. Insofern wird bei dieser Anordnung ebenfalls eine fliehkraftabhängige Reibung bzw. Dämpfung durch den Fliegerring nicht vermieden.

Ebenso offenbart die EP 1 120 582 A1 einen freien Fliegerring bei einem Zweimassenkupplungsschwungrad.

Beispielsweise ist darüber hinaus auch aus der DE 197 51 752 A1 ein gattungsfremder hydrodynamischer Leistungsüberträger bekannt, der einen Torsionsschwingungsdämpfer mit einer Feder-Dämpfer-Einrichtung umfasst, wobei die Feder-Dämpfer-Einrichtung ein Federsystem mit einem Flieger umfasst, der zwei Schraubenfederteile gegen Fliehkräfte abstützt. Bei dieser Anordnung handelt es sich jedoch um ein Zweimassenkupplungsschwungrad mit einem reibend wirksamen Dämpferteil, welches zwischen über ein Federteil federnd gelagerten Massen wirksam wird nicht. Vielmehr erfolgt hier eine Leerlaufdämpfung über die intrinsischen Eigenschaften des hydrodynamischen Leistungsüberträgers. Anders sieht dieses bei den gattungsgemäßen Anordnungen nach der DE 100 28 268 A1 bzw. nach der EP 0 421 965 A1 aus, bei denen eine Leerlaufentkopplung ein wesentliches Element ist und nur unter erheblichem Aufwand bzw. unter Inkaufnahme anderer Nachteile realisiert werden kann.

Es ist Aufgabe vorliegender Erfindung, ein Zweimassenkupplungsschwungrad bereitzustellen, welches gegenüber den bekannten Zweimassenkupplungsschwungrädem auf baulich einfache Weise ein gute Leerlaufentkopplung der beiden Massen ermöglicht und dennoch gute Dämpfungseigenschaften bei größeren Schwingungsamplituden aufweist.

Als Lösung schlägt die Erfindung ein Zweimassenkupplungsschwungrad mit den Merkmalen des Anspruchs 1 vor. Weitere vorteilhafte Ausgestaltungen sind in den Unteransprüchen sowie der nachfolgenden Beschreibung dargelegt.

Insbesondere kann ein Zweimassenkupplungsschwungrad vorgesehen sein, welches um eine Hauptrotationsachse rotieren kann und zwei Massen sowie einen Torsionsschwingungsdämpfer umfasst, der in der Lage ist Rotationsschwingungen über eine zwischen den beiden Massen wirksame Feder-Dämpfer-Einrichtung mit einem Federsystem und eine Dämpfersystem zu dämpfen, wobei in einem lastfreien Zustand die beiden Massen in einer Leerlaufposition um die Hauptrotationsachse rotieren können und in belastetem Zustand gegen die Feder-Dämpfer-Einrichtung um einen Relativwinkel relativ zueinander verdreht um die Hauptrotationsachse rotieren können, welches sich dadurch auszeichnet, dass das Federsystem Federn aufweist, die über Niederhalter radial zur Hauptrotationsachse hin geführt sind, welche über einen Fliegerring miteinander verbunden sind, wobei der Fliegerring zumindest um einen kleinen Leerlaufrelativwinkel um die Leerlaufposition frei den Federn folgen kann, und wobei die Federn zumindest im Bereich des Niederhalters frei gelagert sind.

Hierbei geht die Erfindung von der Grunderkenntnis aus, dass durch die im wesentlichen erfolgte Trennung der federnden sowie der reibenden und mithin dämpfenden Funktionalität der Feder-Dämpfer-Einrichtung eine hervorragende Leerlaufentkopplung mit verhältnismäßig einfachen Mitteln gewährleistet werden kann, während höhere Dämpfungswerte bei großen Amplituden ohne weiteres durch den Dämpfungsteil realisierbar sind.

In vorliegendem Zusammenhang beschreibt der Begriff "frei" einen Zustand einer Baugruppe, ohne wesentlichen Reibkontakt mit einer weiteren Baugruppe. Es versteht sich, dass gegebenenfalls eine derartige Baugruppe gleitend bzw. wälzend gelagert sein kann. Dieses ist jedoch nicht zu verwechseln mit radial außen vorgesehenen, und mithin auch schon bei geringsten Reibungskräften aufgrund des radialen Abstandes von der Hauptrotationsachse einen wesentlichen Beitrag zur Dämpfung leistenden Lagerschuhen für die Federn bzw. mit einer Lagerung der Federn an einer der beiden Massen, wie dieses nach dem Stand der Technik der Fall ist.

Insofern ist vorliegender Fliegering zumindest in einem Relativwinkelbereich um seine Leerlaufposition, den Leerlaufrelativwinkelbereich, reibungsarm, vorzugsweise reibungslos, gelagert und kann somit einer Federbewegung ungehindert folgen. Hierbei ist zu betonen, dass der Federring gemeinsam mit den übrigen Baugruppen des Zweimassenkupplungsschwungrades um die Hauptrotationsachse rotiert und folgt, je nach auftretendem Drehmoment bzw. je nach auftretenden Torsionsschwingungen, der durch eine Verlagerung der beiden Massen bedingten Verlagerung der Federn. Durch die Niederhalter, mit denen die Federn niedergehalten und somit an einer durch die Fliehkraft bedingten Bewegung nach radial außen gehindert werden, ist gewährleistet, dass auch die Federn zumindest im Bereich der Niederhalter frei sind. Hierbei umfasst der Begriff "frei" demnach vorliegend insbesondere Anordnungen, bei denen sich durch Drehschwingungen bedingt verlagernde Baugruppen nicht in reibenden Kontakt stehen.

Ein derartiges Zweimassenkupplungsschwungrad umfasst insbesondere, wie bereits vorstehend angedeutet, eine zweigeteilte Kupplungsschwungmasse, deren beiden Teilmassen über einen Torsionsschwingungsdämpfer miteinander gekoppelt sind. Insofern rotiert die gesamte Anordnung entsprechend der Rotation des zugehörigen Antriebsstranges um ihre Hauptachse. Bei auftretenden Drehmomenten, Drehmomentschwankungen, Stoßen oder ähnlichem werden die beiden Massen relativ zueinander gegen die Federkräfte des Torsionsschwingungsdämpfer um einen Relativwinkel bezüglich der Hauptrotationsachse verlagert, wobei während dessen die beiden Massen, ebenso wie die übrigen Baugruppen des Zweimassenkupplungsschwungrades, weiter um die Hauptrotationsachse rotieren. Dementsprechend werden auch die übrigen Baugruppen, welche der relativen Verlagerung der beiden Massen folgen, wie beispielsweise Teile der Federn, Kräfte übertragende Arme, Reibscheiben oder auch der Fliegerring eine Relativbewegung zumindest bezüglich einer der beiden Massen ausführen. Während hierbei die Federn an sich lediglich eine Bewegung der beiden Massen ermöglichen, sind Dämpferteile vorgesehen, wie beispielsweise Reibscheiben oder Reibflächen, an den die relative Rotationsenergie in Wärme überführt wird, so dass das Zweimassenkupplungsschwungrad dämpfend wirkt.

Es versteht sich, dass auch in sehr engen Grenzen Energie in den Federn dissipiert wird, wenn diese gestaucht werden. Ebenso kann Energie durch Reibung zwischen den Federwindungen dissipiert werden. Im Verhältnis zu den Energieverlusten, die durch reibende Baugruppen auftreten, sind diese Energiedissipationen jedoch vernachlässigbar. Ebenso versteht es sich, dass eine Reibeinrichtung in gewissen Grenzen federnd wirkt, bis beispielsweise eine Haftreibung überwunden ist. Auch derartige federnde Anteile sind in der Regel vernachlässigbar gering, wenn diese mit den Federn selbst verglichen werden. Wesentlich ist jedoch, dass erfindungsgemäß eine Trennung zwischen Federteil und Dämpferteil vorgenommen wird, damit eine gute Leerlaufentkopplung realisiert werden kann, wie nachfolgend näher erläutert werden wird.

Entsprechend der üblichen Gepflogenheiten werden vorliegend sämtliche Baugruppen, die Drehfest mit einer der beiden Massen verbunden sind, wie beispielsweise Kräfte übertragende Arme oder Scheiben bzw. an einer Masse fest vorgesehen Lagerfläche oder ähnliches als zu dieser Masse gehörig bezeichnet, da diese, entsprechende ihrem radialen Abstand zu der Hauptrotationsachse zum Trägheitsmoment der jeweiligen Masse beitragen.

Vorzugsweise liegt eine ausreichende Trennung der beiden Funktionalitäten "Federn" und "Trennen" vor, wenn das Federsystem im Vergleich zu einem Dämpfersystem der Feder-Dämpfer-Einrichtung weiniger als 20%, insbesondere weniger als 10%, der Maximalreibung der Feder-Dämpfer-Einrichtung aufbringt. Dieses gilt insbesondere im Bereich der Leerlaufposition, während bei größeren Relativwinkeln der Beitrag des Federsystems durch Reibung der Federwindungen aneinander durchaus etwas ansteigen kann.

Vorzugsweise sind das Federsystem und das Dämpfersystem der Feder-Dämpfer-Einrichtung auf unterschiedlichen Radien von der Hauptrotationsachse angeordnet. Hierdurch lässt sich eine Trennung zwischen Federung und Dämpfung leichter baulich umsetzen. Hierbei ist es insbesondere vorteilhaft, wenn das Dämpfersystem radial außen angeordnet ist, da dann dort auftretende Kräfte ein größeres Drehmoment bedingen. Ebenso wird der Einfluss von Reibkräften am Federsystem verringert, wenn letztere radial innen angeordnet sind. Zwar bedingt diese Anordnung, dass stärkere Federn verwandt werden müssen, um die gleichen Drehmomente durch die Federn aufbringen zu können. Andererseits ist jedoch gerade diese Anordnung für eine Trennung der beiden Funktionalitäten vorliegend vorzuziehen. Es versteht sich, dass die radiale Anordnungen auch vertauscht werden können, wenn die Reibung im Federsystem beherrschbar ist.

Um die Reibung im Federsystem zu beherrschen, kann es kumulativ bzw. alternativ vorteilhaft sein, Baugruppen, an welchen die Federn anliegen, von denen sie jedoch im Rahmen einer Relativbewegung der beiden Massen eines Zweimassenkupplungsschwungrades in Umfangsrichtung abheben, derart auszugestalten, dass diese sich auch radial außen von den Federn entfernen. Dieses kann beispielsweise bei die Federn umgreifenden Platten, wie einer primär- oder sekundärseitigen Federplatte bzw. Doppelplatte realisiert werden. Hierbei weiten sich die Fenster in Umfangsrichtung vorzugsweise nach innen hin radial außen auf, und zwar insbesondere von der Seite ausgehend, an der die Federn anliegen.

Vorzugsweise ist an dieser Seite noch ein Sattel vorgesehen, an dem die Federn stabil geführt anliegen können.

Werden bei einer derartigen Anordnung die beiden Massen, Primärmasse und Sekundärmasse, relativ zueinander verlagert, so hebt sich die Anlagenseite einer der beiden Massen von der Feder ab, während die Anlageseite der anderen Masse die Feder trägt. An der gegenüberliegenden Seite des jeweiligen Fensters sind die Verhältnisse umgekehrt. Durch die Aufweitung der Fenster entfernt sich der Fensterrahmen von der Feder, so dass die Feder lediglich mit den Sattelpunkten und mit den Anlageseiten in Kontakt ist, die eine identische Relativbewegung durchführen. Auf diese Weise kann eine Reibung am radiale äußeren Rand der Fenster zwischen Feder und den die Federn umgebenden Baugruppen auf ein Minimum gesenkt werden.

Eine derartige Ausgestaltung ist, unabhängig von den übrigen Merkmalen vorliegender Erfindung für alle Baugruppen, an denen die Federn in Umfangsrichtung anliegen und von denen sie sich bei einer Relativdrehung der beiden Massen entfernen können, vorteilhaft. Hierzu können sich diese Baugruppen von der anliegenden Seite ausgehend in Richtung auf die Federn insbesondere auf ihrer radial außen liegenden Seite aufweiten.

Vorzugsweise weist das Zweimassenkupplungsschwungrad eine Reibeinrichtung auf, die wenigstens eine reibende Oberfläche umfasst, deren Normalenvektor eine axiale Komponente aufweist. Ein derartig ausgestaltete Reibeinrichtung ist auch unabhängig von den übrigen Merkmalen vorliegender Erfindung vorteilhaft, da hierdurch ein von der Fliehkraft abhängiger Einfluss auf die Reibung minimiert wird.

Insbesondere kann das Zweimassenkupplungsschwungrad kumulativ bzw. alternativ eine Reibeinrichtung aufweisen, die wenigstens eine reibende Oberfläche umfasst, die in Umfangsrichtung axial variiert. Hierdurch lassen sich gezielt und mit verhältnismäßig geringem Aufwand Reibungskräfte in Abhängigkeit vom relativen Verdrehwinkel zwischen Primär- und Sekundärmasse einstellen.

Die Reibeinrichtung kann kumulativ bzw. alternativ wenigstens zwei Keile umfassen, welche an einem axial umlaufenden Bauteil, vorzugsweise an einer Anpressplatte, befestigt sind. Hierdurch kompensieren sich vorzugsweise die Fliehkräfte der Reibkeile, so dass die Reibeinrichtung unabhängig von der Drehzahl eines Zweimassenkupplungsschwungrades arbeiten und ihre Kennlinie zuverlässig durchlaufen kann. Durch eine Anpressplatte kann darüber hinaus kumulativ bzw. alternativ eine gleichmäßige Anpressung der Reibkeile, insbesondere unabhängig von einer die Anpresskraft aufbringenden Tellerfeder, gewährleistet werden.

Vorzugsweise sind die Reibkeile und/oder Reibrampen bzw. Reibrampenringen aus sehr eigensteifen, insbesondere als Volumenmaterial eigensteifen, Materialien, also metallischen Materialien oder harten Kunststoffen. Hierdurch lassen sich federnde Effekte minimieren, die ansonsten einer funktionalen Trennung zwischen Dämpferteil und Federteil entgegenstehen würden. Es versteht sich, dass eine derartige Materialwahl auch unabhängig von den übrigen Merkmalen vorliegender Erfindung dementsprechend vorteilhaft ist.

Für die Reibkeile und/oder die Reibrampen bzw. Reibrampenringe kommen insbesondere Reibbelagmaterialien in Frage. Bevorzugt sind entweder die Reibkeile oder die Reibrampen metallisch und die auf dem Metall reibende Baugruppe ein Reibbelag, da diese Materialkombination bei Bremsen und Kupplungen, insbesondere für Kraftfahrzeuge, hinreichend bekannt und in ihren Eigenschaften getestet sind. Durch die Verwendung einzelner Keil oder Rampen aus Reibkunststoffen können hierbei die Materialkosten gesenkt werden, insbesondere wenn diese durch umlaufende metallische Baugruppen, wie Tellerfedern oder Anpressplatten radial gesichert werden, wie bereits vorstehend erläutert. Die Verbindung zwischen den metallischen Baugruppen und den Kunststoffen kann hierbei auf jede denkbare Art, insbesondere durch Einspritzen, Einrasten oder ähnliches, erfolgen. Auch sind unter gegebenen Umständen verdrehsichere Formschlussverbindungen vorteilhaft. Die Verwendung einzelner Reibkeile bzw. Reibrampen ist auch unabhängig von den übrigen Merkmalen vorliegender Erfindung bei Zweimassenkupplungsschwungrädem vorteilhaft.

Für einen Rampenring einer Reibeinrichtung bei einem Zweimassenkupplungsschwungrad kann auch ein Blech mit einer eingeprägten Reibrampe oder eine sonstige metallische Baugruppe mit Rampen vorgesehen sein, gegen welches Reibkeile reiben. Insbesondere kann eine ohnehin vorhandene Baugruppe, wie beispielsweise ein primärseitiges oder sekundärseitiges Blech entsprechend genutzt werden. Andererseits kann auch eine Tellerfeder wellenförmig bzw. mit Rampen oder Reibrampen ausgeformt werden, um entsprechend variierende Anpresskräfte im Zusammenspiel mit weiteren Rampen bzw. Keilen zu erzeugen. Eine derartige Ausgestaltung der Rampen ist unabhängig von den übrigen Merkmalen vorliegender Erfindung vorteilhaft, da sehr kostensparend.

Eine anpressende Tellerfeder der Reibeinrichtung kann einerseits frei an den jeweiligen Baugruppen, an denen sie sich abstützt anliegen, wenn über sie kein Drehmoment übertragen wird. Sollte dieses der Fall sein, so kann sie vorteilhaft über eine in Umfangsrichtung wirksame Formschlussverbindung, wie beispielsweise eine Verzahnung mit der bzw. den jeweiligen Baugruppen verbunden sein. Erweist es sich als notwendig, eine Tellerfader axial zu sichern, so kann diese beispielsweise in einer umlaufenden, nach radial innen weisenden oder nach radial außen weisenden Nut der jeweiligen Baugruppe angeordnet sein. Zur Montage wird die Tellerfeder dann verspannt und entsprechend radial geöffnet, um in die Nut einzurasten. Alternativ kann die Tellerfeder auch über eine Krimp-Verbindung befestigt werden, indem sie entsprechend positioniert und dann die entsprechende Baugruppe entsprechend angekrimpt bzw. verstemmt wird.

Kumulativ bzw. alternativ zu dem Merkmalen vorliegender Erfindung kann es vorteilhaft sein, bei einem Zweimassenkupplungsschwungrad Platten, die Drehmoment von einer der beiden Massen auf eine Feder-Dämpfer-Einrichtung übertragen und doppelt ausgebildet sind, diese mit gleicher Stärke aus identischem Material auszugestalten, so dass diese aus einem Material, beispielsweise aus einem Blech, hergestellt werden können. Dieses hat zudem den Vorteil, dass durch die doppelte Ausgestaltung diese eigensteifer bzw. verwindungssteifer werden und im übrigen auch Kippmomenten besser widerstehen können. Insbesondere ist es vorteilhaft, wenn diese beiden Baugruppen symmetrisch ausgebildet sind, so dass hierzu auch das identische Werkzeug zur Anwendung kommen kann.

Darüber hinaus kann kumulativ bzw. alternativ eine fliegende Federplatte mit gleicher Stärke aus identischem Material wie eine primärseitige oder die sekundärseitige Platte, die Drehmoment von einer der beiden Massen auf eine Feder-Dämpfer-Einrichtung überträgt, ausgebildet sein. Hierbei spielt es keine Rolle, inwieweit es sich hierbei um eine doppelte Platte oder eine einzelne Platte handelt. Da die fliegende Federplatte im wesentlichen auf einem anderen Radius läuft, wie zumindest eine der beiden primär- oder sekundärseitigen Platten, kann sie nicht nur aus demselben Material sondern auch aus dem identischen Gebiet eines Blechs, aus dem auch die entsprechende primär- oder sekundärseitige Platte hergestellt ist, hergestellt werden. Dieses spart erheblich Materialkosten, was soweit geht, dass durch die freie Federplatte überhaupt keine Materialmehrkosten auftreten brauchen.

Dieses hat zudem den Vorteil, dass bei gleichen Blechstärken die jeweiligen Baugruppen auch den auftretenden Drehmomenten mit einem identischen Verhalten entgegentreten, wodurch die Gesamtanordnung besser beherrschbar wird.

Eine primärseitige Federplatte kann, unabhängig von den übrigen Merkmalen vorliegender Erfindung, als Membran ausgebildet sein. Auf diese Weise wird ein Zweimassenkupplungsschwungrad in die Lage versetzt, auch axiale Schwingungen abzufangen, bevor diese die Sekundärmasse erreichen.

Wenigstens eine ein Drehmoment übertragende Platte eines Zweimassenkupplungsschwungrades kann kumulativ bzw. alternativ mit einem Reibelement unmittelbar reibend wechselwirken. Dieses bedingt eine sehr bauteilarme und somit kostengünstige Ausführung eines Zweimassenkupplungsschwungrades. Hierbei kann die Platte in einem umlaufenden Bereich, in dem das Reibelement zu finden ist, in axialer Richtung variieren, so dass entsprechend variierende Reibungskräfte aufgebracht werden können. Vorzugsweise wird als Platte eine primär- oder sekundärseitige Federplatte zur Anwendung kommen.

Bevorzugt kommen für ein erfindungsgemäßes Zweimassenkupplungsschwungrad Niederhalter zur Anwendung, die beiderseits in Umfangsrichtung zwischen Federn liegen und somit - anders dargestellt - eine Feder, die zwischen zwei Anlagen an der Primärmasse bzw. an der Sekundärmasse angeordnet ist, in zwei Teile teilen. Gleichwohl kann es vorteilhaft sein, lange Federn vorzusehen. Aus diesem Grunde wird, unabhängig von den übrigen Merkmalen vorliegender Erfindung, vorgeschlagen, dass die Niederhalter jeweils in eine Feder eingreifen oder diese von innen durchgreifen. Derartige Niederhalter bauen vorteilhafterweise, entgegen den Niederhaltern aus der DE 100 28 268 A1 äußerst platzsparend, da sie insbesondere in axialer Richtung keinen Bauraum benötigen.

Erfindungsgemäß weist das Federsystem geradlinige Federn auf, die über Niederhalter radial zur Hauptrotationsachse hin geführt sind, welche über einen Fliegerring miteinander verbunden sind. Geradlinige Federn weisen an sich eine geradlinige Federachse auf, können jedoch durchaus bauchig oder mit einzelnen versetzten Windungen versehen sein. Durch eine derartige Maßnahme können zunächst die Herstellungskosten für ein gattungsgemäßes Zweimassenkupplungsschwungrad unabhängig von den übrigen Merkmalen vorliegender Erfindung gesenkt werden. Gleichwohl kann über die Niederhalter ein großer Federweg gewährleistet werden, was sich für die Eigenschaften eines derartigen Zweimassenkupplungsschwungrades hinsichtlich seiner Dämpfungseigenschaften vorteilhaft auswirkt, da durch die Niederhalter zwei Federn in Reihe geschaltet und somit an einer Reibung unter Betriebsbedingungen radial außen an relativ bezüglich der Federn sich bewegenden Baugruppen gehindert werden können. Hierbei hat sich herausgestellt, dass auch letzteres Merkmal unabhängig von den übrigen Merkmalen vorliegender Erfindung vorteilhaft ist, um in erfindungsgemäßer Weise bei einem Zweimassenkupplungsschwungrad die Dämpferteile und die Federteile des entsprechenden Torsionsschwingungsdämpfers funktional soweit als möglich zu trennen.

Eine Drehmoment in Richtung Primärmasse übertragende Baugruppe der Sekundärmasse kann mit der Sekundärplatte, welche die Reibfläche für die Kupplung trägt, über eine in der Sekundärplatte versenkte Nietverbindung miteinander verbunden sein. Eine derartige Verbindung hat bei der Herstellung des Zweimassenkupplungsschwungrades unabhängig von den übrigen Merkmalen vorliegender Erfindung den Vorteil, dass die Sekundärplatte lediglich von einer Seite bearbeitet werden braucht. Insofern kann die Sekundärplatte durch verhältnismäßig einfache Herstellverfahren, wie insbesondere Gießen, kostengünstig hergestellt werden, da sie lediglich von einer Seite nachbearbeitet werden braucht, was ebenfalls unabhängig von den übrigen Merkmalen vorliegender Erfindung aus Kostengründen vorteilhaft ist.

Diese Nachbearbeitung kann beispielsweise lediglich an dem Flansch der Sekundärplatte in dem Bereich, in dem ein Gleitlager vorgesehen ist, vorgenommen werden. Auch jede andere motorseitige bzw. der Primärseite zugewandte Stelle der Sekundärplatte kann hierfür vorteilhaft genutzt werden. Beim anschließenden Vernieten kann dann von dieser motorseitigen bzw. primärseitigen Stelle das Maß für die Nietverbindung und somit die Lage zwischen Sekundärplatte und der an dieser zu befestigenden Baugruppe gewonnen werden.

Es ist zu betonen, dass bei einem Zweimassenkupplungsschwungrad zumindest eine Sekundärseite vorhanden ist, die eine Reibfläche aufweist, welche mit der Reibscheibe einer Reibungskupplung und einer betätigbaren Kupplungsandruckplatte zusammenwirkt, die ihrerseits drehfest mit der Sekundärmasse verbunden ist und die Reibscheibe von der anderen Seite als die Reibfläche der Sekundärmasse umfasst. Die Reibscheibe hingegen dient bei dieser Anordnung als Abtrieb und ist in der Regel auf eine Abtriebswelle aufgesetzt.

Weitere Vorteile, Ziele und Eigenschaften vorliegender Erfindung werden anhand nachfolgender Beschreibung anliegender Zeichnung erläutert, in der beispielhaft zwei Ausführungsformen vorliegender Erfindung dargestellt sind. In der Zeichnung zeigen:
- Figur 1: ein erstes erfindungsgemäßes Zweimassenkupplungsschwungrad in seiner Einbauposition in einem Radialschnitt entlang der Linie I-I in Fig. 2;
- Figur 2: das Zweimassenkupplungsschwungrad nach Fig. 1 in einem Querschnitt entlang der Linie II-II in Fig. 1;
- Figur 3: ein zweites erfindungsgemäßes Zweimassenkupplungsschwungrad in ähnlicher Darstellung wie Fig. 1 im Schnitt entlang der Linie III-III in Fig. 5;
- Figur 4: das zweite Zweimassenkupplungsschwungrad im Schnitt entlang der Linie IV-IV in Fig. 5;
- Figur 5: das zweite Zweimassenkupplungsschwungrad im Querschnitt entlang der Linie V-V in Fign. 3 und 4;
- Figur 5A: bauchige Innenfedern für eine alternative zu den in Figur 5 dargestellten Federn;
- Figur 6: das zweite Zweimassenkupplungsschwungrad in Explosionsansicht;
- Figur 7: eine mögliche Herstellungsweise für eine freie Federplatte und eine korrespondierende primär- bzw. sekundärseitige Platte;
- Figur 8: eine Aufsicht auf die ausgestanzten Teile nach Figur 7;
- Figur 9: ein Schnitt durch die Darstellung nach Figur 8;
- Figur 10: ein drittes Zweimassenkupplungsschwungrad in identischem Schnitt wie Fig. 3;
- Figur 11: das dritte Zweimassenkupplungsschwungrad bei einer Relativverlagerung zwischen Primär- und Sekundärmasse in einem zu dem Schnitt nach Fig. 10 identischem Schnitt durch diese beiden Massen;
- Figur 12: ein viertes Zweimassenkupplungsschwungrad in identischem Schnitt wie Fig. 3;
- Figur 13: das vierte Zweimassenkupplungsschwungrad bei einer Relativverlagerung zwischen Primär- und Sekundärmasse in einem zu dem Schnitt nach Fig. 11 identischem Schnitt durch diese beiden Massen;
- Figur 14: ein fünftes erfindungsgemäßes Zweimassenkupplungsschwungrad in seiner Einbauposition in einem Radialschnitt ähnlich Fig. 1;
- Figur 15: eine Feder-Dämpfer-Anordnung im Schnitt entlang der Linie XV-XV in Figur 16;
- Figur 16: die Feder-Dämpfer-Anordnung nach Fig. 15 im Schnitt entlang der Linie XVI-XVI in Fig. 15;
- Figur 17: eine Feder-Dämpfer-Anordnung im Schnitt entlang der Linie XVII-XVII in Figur 18;
- Figur 18: die Feder-Dämpfer-Anordnung nach Fig. 17 im Schnitt entlang der Linie XVIII-XVIII in Fig. 17;
- Figur 19: eine schematische Ansicht einer Reibeinrichtung senkrecht zur Hauptrotationsachse entlang der Linie XIX-XIX in Figur 20;
- Figur 20: die Reibeinrichtung nach Figur 19 im Schnitt entlang der Linie XX-XX in Figur 19;
- Figur 21: die Reibeinrichtung nach Figuren 19 und 20 bei einer Relativverlagerung der beiden Massen des Zweimassenkupplungsschwungrades in ähnlicher Darstellung wie Figur 19 im Schnitt entlang der Linie XXI-XXI in Figur 22;
- Figur 22: die Reibeinrichtung nach Figur 21 im Schnitt entlang der Linie XXII-XXII in Fig. 21;
- Figur 23: eine schematische Ansicht einer weiteren Reibeinrichtung in ähnlicher Darstellung wie Fig. 19 entlang der Linie XXIII-XXIII in Figur 24;
- Figur 24: die Reibeinrichtung nach Figur 23 im Schnitt entlang der Linie XXIV-XXIV in Figur 23;
- Figur 25: die Reibeinrichtung nach Figuren 23 und 24 bei einer Relativverlagerung der beiden Massen des Zweimassenkupplungsschwungrades in ähnlicher Darstellung wie Figur 23 im Schnitt entlang der Linie XXV-XXV in Figur 26;
- Figur 26: die Reibeinrichtung nach Figur 25 im Schnitt entlang der Linie XXVI-XXVI in Fig. 25;
- Figur 27: eine schematische Ansicht einer weiteren Reibeinrichtung in ähnlicher Darstellung wie Fig. 22;
- Figur 28: die Anordnung nach Fig. 27 in ähnlicher Darstellung wie Fig. 20;
- Figur 29: eine schematische Ansicht einer weiteren Reibeinrichtung in ähnlicher Darstellung wie Fig. 19 geschnitten entlang der Linie XXIX-XXIX in Figur 30;
- Figur 30: die Reibeinrichtung nach Figur 29 im Schnitt entlang der Linie XXX-XXX in Figur 29;
- Figur 31: die Reibeinrichtung nach Figuren 29 und 30 bei einer Relativverlagerung der beiden Massen des Zweimassenkupplungsschwungrades in ähnlicher Darstellung wie Figur 29 im Schnitt entlang der Linie XXXI-XXXI in Figur 32;
- Figur 32: die Reibeinrichtung nach Figur 31 im Schnitt entlang der Linie XXXII-XXXII in Fig. 31;
- Figur 33: eine schematische Ansicht einer weiteren Reibeinrichtung in ähnlicher Darstellung wie Fig. 19 geschnitten entlang der Linie XXXIII-XXXIII in Figur 34;
- Figur 34: die Reibeinrichtung nach Figur 33 im Schnitt entlang der Linie XXXIV-XXXIV in Figur 33;
- Figur 35: die Reibeinrichtung nach Figuren 33 und 34 bei einer Relativverlagerung der beiden Massen des Zweimassenkupplungsschwungrades in ähnlicher Darstellung wie Figur 33 im Schnitt entlang der Linie XXXV-XXXV in Figur 36;
- Figur 36: die Reibeinrichtung nach Figur 35 im Schnitt entlang der Linie XXXVI-XXXVI in Fig. 35;
- Figur 37: eine schematische Ansicht einer weiteren Reibeinrichtung in ähnlicher Darstellung wie Fig. 19 geschnitten entlang der Linie XXXVII-XXXVII in Figur 38;
- Figur 38: die Reibeinrichtung nach Figur 37 im Schnitt entlang der Linie IIXL-IIXL in Figur 37;
- Figur 39: die Reibeinrichtung nach Figuren 37 und 38 bei einer Relativverlagerung der beiden Massen des Zweimassenkupplungsschwungrades in ähnlicher Darstellung wie Figur 37 im Schnitt entlang der Linie IXL-IXL in Figur 40; und
- Figur 40: die Reibeinrichtung nach Figur 39 im Schnitt entlang der Linie XL-XL in Fig. 39.

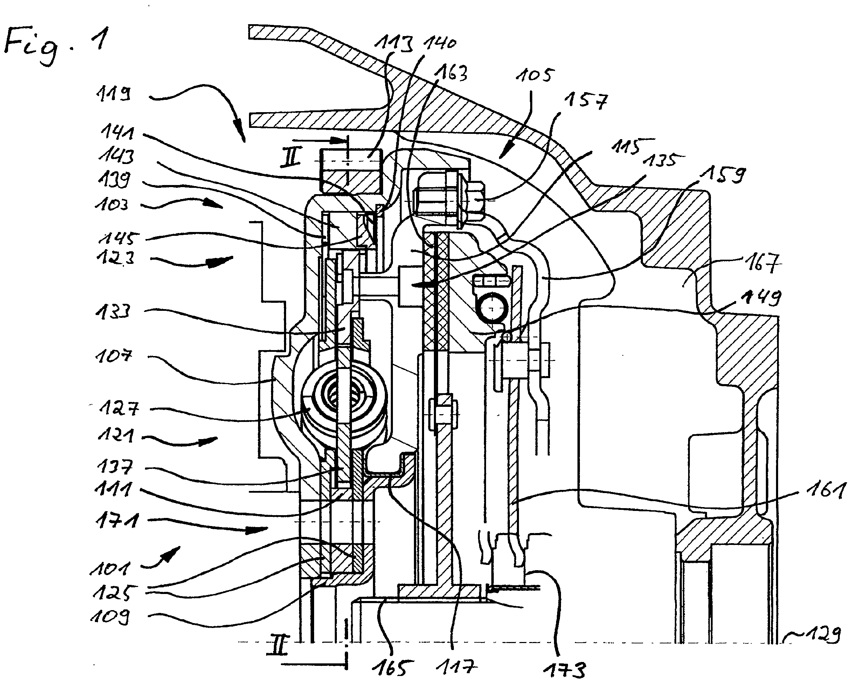

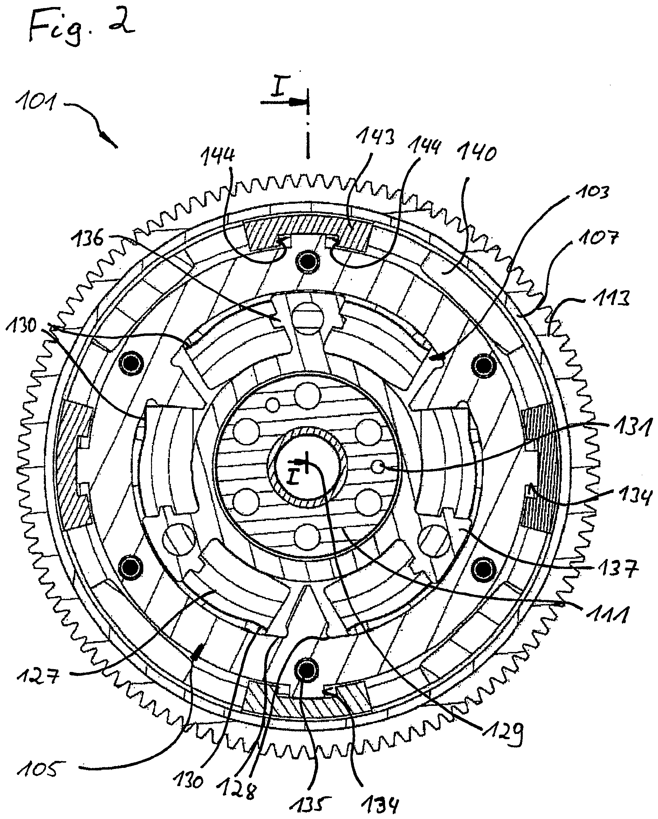

Das in den Figuren 1 und 2 dargestellte Zweimassenkupplungsschwungrad 101 umfasst eine Primärmasse 103 und eine Sekundärmasse 105. Hierbei umfasst die Primärmasse 103 ein Primärblech 107 und eine Zentriernabe 109. Das Primärblech 107 trägt des weiteren einen Anlasserzahnkranz 113. Die Sekundärmasse 105 umfasst im Wesentlichen eine Sekundärplatte 115, die über einen Gleitlager 117 auf dem Zentrierflansch 109 drehbar gelagert ist.

Neben dieser Drehlagerung wechselwirken die beiden Massen 103 und 105 über eine Feder-Dämpfer-Anordnung 119 miteinander. Diese Feder-Dämpfer-Anordnung 119 umfasst einen Federteil 121 und einen Reibteil 123. Hierbei versteht es sich, dass der Federteil 121 gegebenenfalls nicht ausschließlich federnd, sondern auch reibend und mithin dämpfend bzw. Energie vernichtend wirkt, während der Reibteil 123 in gewissen Grenzen auch federnde Eigenschaften aufweisen kann.

Bei dem in Figuren 1 und 2 dargestellten Zweimassenkupplungsschwungrad 101 sind jeweils primärseitig bzw. sekundärseitig Baugruppen vorgesehen, die von der jeweiligen Masse 103 bzw. 105 zu der Feder-Dämpfer-Anordnung 119 bzw. zu dem Federteil 121 und zu dem Dämpferteil 123 eine Wirkverbindung schaffen.

Primärseitig ist dieses bezüglich des Federteils 121 eine primäre Federdoppelscheibe 125, welche Federn 127 des Federteils 121 umgreift und welche auf dem Zentralflansch 109 über Schraubverbindung durch Schraubenlöcher 131 drehfest bezüglich der Primärmasse 103 bzw. bezüglich des Primärblechs 107, des Zentralflansches 109 und eines Abstandblechs 111 positioniert ist. Dementsprechend weist die Sekundärmasse 105 eine sekundärseitige Federscheibe 133 auf, welche über eine Nietverbindung in Öffnungen 135 an der Sekundärplatte 115 positioniert ist und ebenfalls die Federn 127 umgreift. Das Federteil 121 umfasst darüber hinaus ein freie Federplatte 137, welche der Positionierung der Federn 127 dient.

Der Dämpferteil 123 umfasst primärseitig zwei Anpressscheiben 139 und 140 sowie Keile 143 und 145, die über eine Tellerfeder 141 axial aufeinander zu gespannt sind, welche zwischen dem Keil 145 und der Anpressscheibe 140 angeordnet ist. Die Keile 143 und 145 weisen in Umfangrichtung variierende Stärken auf. Hierbei ist einer der Keile 143, 145, nämlich der an der Anpressscheibe 139 anliegende Keil 143 in Drehverbindung mit der sekundärseitigen Federscheibe 133 der Sekundärmasse 105, wobei der Keil 143 in Umfangsrichtung Anschläge 144 aufweist, gegen welche die sekundärseitige Federscheibe 133 bei bestimmten Verdrehwinkeln mit Anschläge 134 anschlägt. Die Anpressscheibe 139 ist als Gleitscheibe ausgestaltet, auf der die Keile 143 gleiten können. Die Keile 145 sind drehfest mit der Tellerfeder 141 und der Anpressscheibe 139 verbunden, wobei die Tellerfeder 141 ihrerseits drehfest über die Anpressscheibe 140 mit dem Primärblech 107 verbunden ist, welcher in eine nicht bezifferten Nut des Primärblechs fixiert wurde. Durch diese Anordnung können über den Verdrehwinkel zwischen den beiden Massen 103 und 105 variierende Reibungskräfte erzeugt werden.

Im Übrigen zeigt Figur 1 eine Einbaumöglichkeit eines erfindungsgemäßen Zweimassenkupplungsschwungrades, bei dem die Sekundärplatte 115 über Schrauben 157 mit einem Kupplungsgehäuse 159 verbunden ist, welches seinerseits eine Kupplungsandruckplatte 149 mit einer Tellerfeder 161 trägt, welche die Kupplungsandruckplatte 149 gegen eine Reibscheibe 163 drückt, welche zwischen der Kupplungsandruckplatte 149 und der Sekundärplatte 115 eingeklemmt wird. Die Gesamtanordnung ist in einem Kupplungsraum 167 angeordnet.

Wird das radial innenliegende Ende der Tellerfeder 161 durch einen Zentralausrücker 173 belastet, so wird die Reibscheibe 163 entlastet und somit die entsprechende Kupplung geöffnet.

In geschlossenem Zustand wird hingegen ein Drehmoment von einer Antriebswelle, die über Schrauben, welche in Schraubenöffnungen 171 der Baugruppen 107, 109, 111 und 125 angeordnet sind, mit der Primärmasse 103 verbunden ist, über die Primärmasse 103, die Feder-Dämpfer-Anordnung 119 und die Sekundärmasse 105 sowie die Kupplungsandruckplatte 149 auf die Reibscheibe 163 und hiermit auf eine mit der Reibscheibe 163 verbundene Abtriebswelle 165 übertragen.

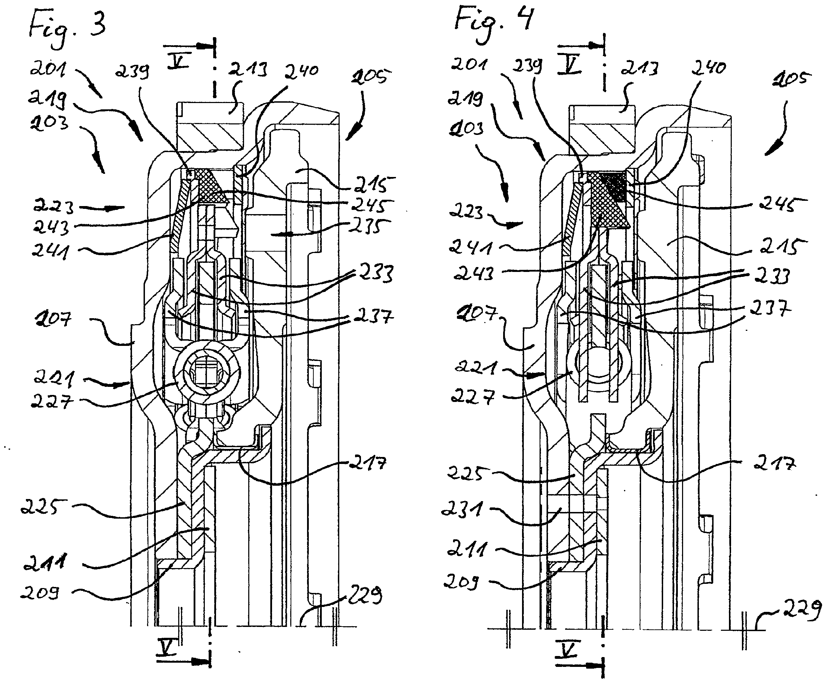

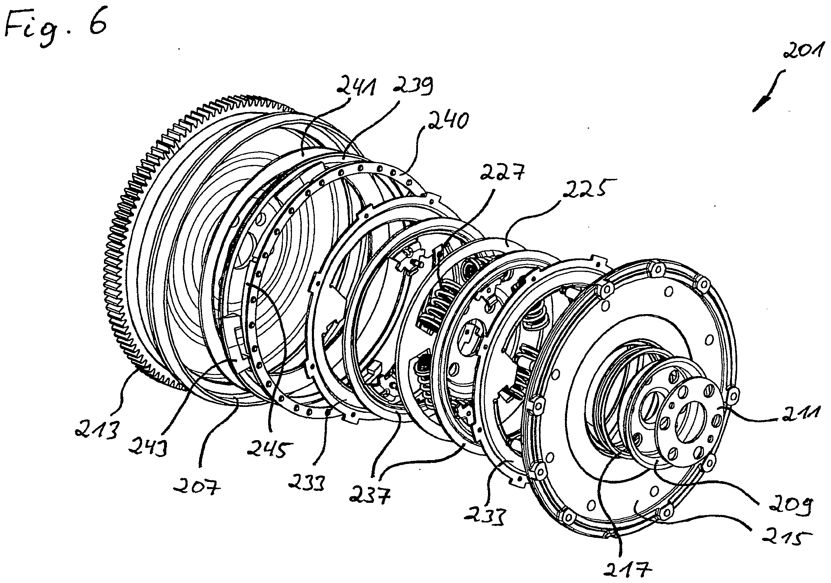

Die in Figuren 3 bis 6 dargestellte Anordnung unterscheidet sich von der Anordnung nach Figur 1 und 2 nur unwesentlich, sodass auf eine Detailbeschreibung dieser Anordnung verzichtet wird. Entsprechend dieser Übereinstimmung sind für gleichwirkende Baugruppen auch gleiche Ziffern verwendet worden, wobei diese an ihrer ersten Stelle statt der Ziffer 1 die Ziffer 2 umfassen. Ein Unterschied ist, dass bei dieser Ausführungsform ein Schraubenblech 211 vorgesehen ist, welches kupplungsseitig an dem Zentralflansch 209 aufliegt und einer besseren Fixierung der Schrauben, mit welchen das Zweimassenkupplungsschwungrad 201 primärseitig an einer Antriebswelle befestigt wird, dient.

Bei dem in Figuren 3 bis 6 dargestellten Zweimassenkupplungsschwungrad 201 sind jeweils primärseitig bzw. sekundärseitig Baugruppen vorgesehen, die von der jeweiligen Masse 203 bzw. 205 zu der Feder-Dämpfer-Anordnung 219 bzw. zu dem Federteil 221 und zu dem Dämpferteil 223 eine Wirkverbindung schaffen.

Primärseitig ist dieses bezüglich des Federteils 221 eine primäre Federscheibe 225, welche Federn 227 des Federteils 221 umgreift und welche auf dem Zentralflansch 209 über Schraubverbindung durch Schraubenlöcher 231 drehfest bezüglich der Primärmasse 203 bzw. bezüglich des Primärblechs 207, des Zentralflansches 209 und des Schraubenblechs 211 positioniert ist. Dementsprechend weist die Sekundärmasse 205 ein Doppelblech 233 auf, welches über eine Nietverbindung in Öffnungen 235 an der Sekundärplatte 215 positioniert ist und ebenfalls die Federn 227 umgreift. Das Federteil 221 umfasst darüber hinaus ein doppelte freie Federplatte 237, welche der Positionierung der Federn 227 dient.

Wie unmittelbar aus dem Vergleich dieser beiden ersten Ausführungsbeispiele ersichtlich, spielt es keine wesentliche Rolle, ob die primärseitige Federplatte, die sekundärseitige Federplatte bzw. die freie Federplatte doppelt oder als Einzelplatte ausgebildet sind. Vorzugsweise ist eine der beiden zu den Massen gehörigen Platten doppelt und die andere einfach ausgebildet, so dass diese ohne weiteres an radial identischer Position jeweils angeordnet und die Federn ergreifen können. Vorzugsweise sind hierbei doppelt ausgebildete Platten vorzugsweise mit gleicher Stärke aus identischem Material ausgestaltet, so dass diese aus einem Material, beispielsweise aus einem Blech, hergestellt werden können. Insbesondere ist es vorteilhaft, wenn diese beiden Baugruppen symmetrisch ausgebildet sind, so dass hierzu auch das identische Werkzeug zur Anwendung kommen kann.

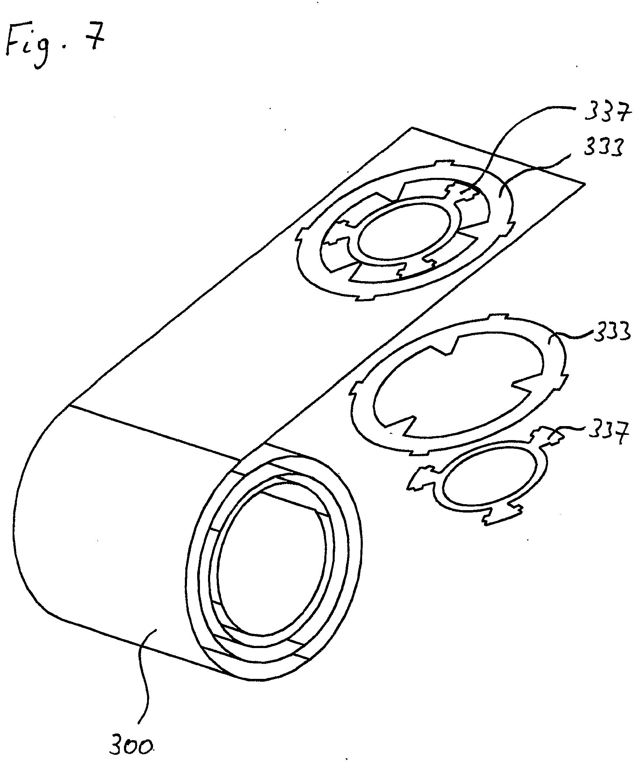

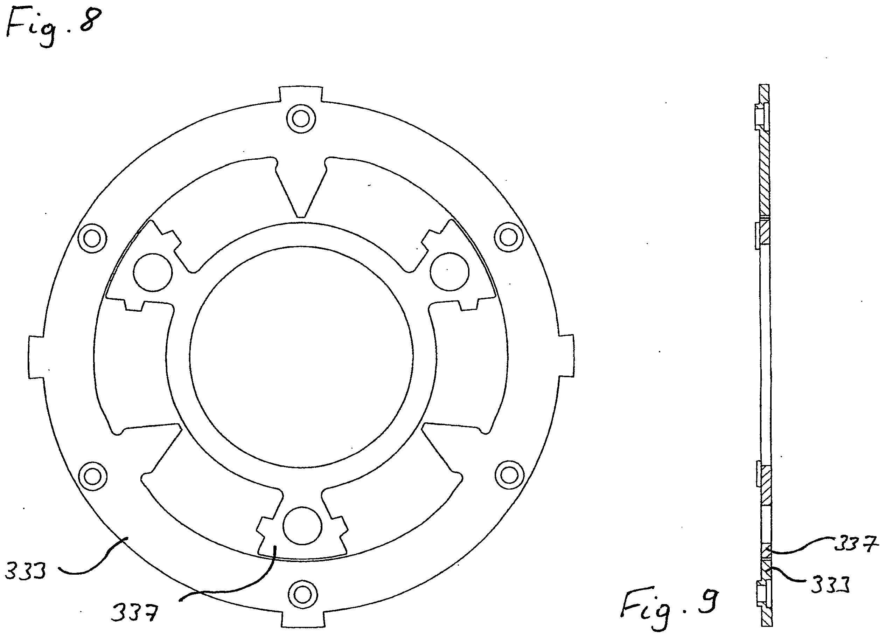

Darüber hinaus kann, wie ebenfalls anhand dieser beiden ersten Ausführungsbeispiele ersichtlich, die freie Federplatte mit gleicher Stärke aus identischem Material wie die primärseitige oder die sekundärseitige Federplatte ausgebildet sein. Hierbei spielt es keine Rolle, inwieweit es sich hierbei um eine doppelte Platte oder eine einzelne Platte handelt. Da die freie Federplatte 337 im wesentlichen auf einem anderen Radius läuft, wie zumindest eine der beiden primär- oder sekundärseitigen Platten, kann sie nicht nur aus demselben Material sondern auch aus dem identischen Gebiet eines Blechs 300, aus dem auch die entsprechende primär- oder sekundärseitige Platte 333 hergestellt ist, hergestellt werden, wie in Figuren 7 bis 9 dargestellt. Dieses spart erheblich Materialkosten, was soweit geht, dass durch die freie Federplatte überhaupt keine Materialmehrkosten auftreten brauchen.

Der Dämpferteil 223 umfasst primärseitig zwei Anpressscheiben 239 und 240, die über eine Tellerfeder 241 axial aufeinander zu gespannt sind und zwischen denen Keile 243 und 245 angeordnet sind, welche durch die Tellerfeder 241 aneinander gepresst werden und in Umlaufrichtung variierende Stärken aufweisen. Hierbei ist einer der Keile 243, 245, nämlich der radial innen liegende Keil 243 in Drehverbindung mit dem Doppelblech 233 der Sekundärmasse 205, wobei der Keil 243 in Umfangsrichtung Anschläge 244 aufweist, gegen welche das Doppelblech 233 bei bestimmten Verdrehwinkeln mit Anschläge 234 anschlägt. Die Keile 245 sind fest mit der Anpressscheibe 240 verbunden, welche ihrerseits über eine Krimp-Verbindung drehfest mit dem Primärblech 207 verbunden ist. Die Tellerfeder ist durch eine in Umfangsrichtung wirksame Formschlussverbindung jeweils mit dem Primärblech 207 und der Anpressscheibe 239 verbunden, so dass sowohl die Tellerfeder 241 als auch die Anpressscheibe 239 drehfest bezüglich der Primärmasse 203 ausgebildet sind. Die Keile 243 hingehen können bezüglich der Anpressscheibe 239 und mithin auch bezüglich der Primärmasse 203 eine Relativbewegung durchführen. Durch diese Anordnung können über den Verdrehwinkel zwischen den beiden Massen 203 und 205 variierende Reibungskräfte erzeugt werden.

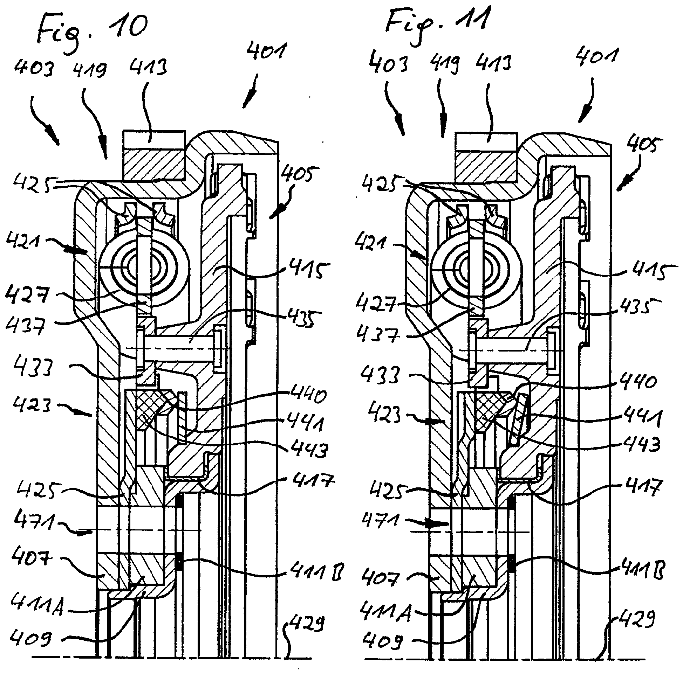

Die Anordnung nach Figuren 10 und 11 entspricht in wesentlichen Teilen der Anordnung nach Figuren 3 bis 6, so dass hinsichtlich der Übereinstimmungen auf Wiederholungen verzichtet wird. Die ähnlich wirkenden Baugruppen sind zur Vereinfachung mit bis auf die erste Stelle identischen Bezugsziffern versehen.

Wesentlicher Unterschied zwischen diesen Ausführungsbeispielen ist die Anordnung der Federteile 221 bzw. 421 und der Dämpferteile 223 bzw. 423. Während bei der Ausführungsform nach Figuren 3 bis 6 die Federteile 221 einen geringeren Abstand von der Hauptrotationsachse 229 als die Dämpferteile 223 aufweisen, sind diesbezüglich die Verhältnisse bei der in Figuren 10 und 11 dargestellten Ausführungsform umgekehrt. Hier hat der Federteil 421 eine radial größeren Abstand von der Hauptrotationsachse 429 als der Dämpferteil 423.

Letztere Anordnung erscheint erfindungsgemäß jedoch nur möglich, wenn minimalste Reib- bzw. Dämpfungswerte durch die Federn bedingt sind. Dieses kann unter anderem auch durch eine geeignete Fenstergeometrie der jeweiligen, die Federn 127 bzw. 227 oder 427 umgreifenden Platten realisiert werden. Hierbei weiten sich die Fenster in Umfangsrichtung vorzugsweise nach innen hin auf, und zwar insbesondere von der Seite ausgehend, an der die Federn anliegen. Vorzugsweise ist an dieser Seite noch ein Sattel 128, 130 (siehe Fig. 2) vorgesehen, an dem die Federn radial stabil geführt anliegen können. Werden bei einer derartigen Anordnung die beiden Massen, Primärmasse und Sekundärmasse, relativ zueinander verlagert, so hebt sich die Anlagenseite einer der beiden Massen von der Feder ab, während die Anlageseite der anderen Masse die Feder trägt. An der gegenüberliegenden Seite des jeweiligen Fensters sind die Verhältnisse umgekehrt. Durch die Aufweitung der Fenster entfernt sich bei dieser Relativbewegung zwischen Federende und Anlagenseite der Fensterrahmen von der Feder, so dass die Feder lediglich mit den Sattelpunkten und mit den Anlageseiten in Kontakt ist, die eine identische Relativbewegung durchführen. Auf diese Weise kann eine Reibung am radiale äußeren Rand der Fenster zwischen Feder und den die Federn umgebenden Baugruppen auf ein Minimum gesenkt werden.

In Abweichung von dem Ausführungsbeispiel nach Figuren 3 bis 6 weist die Anordnung nach Figuren 10 und 11 eine primärseitige Doppelplatte 425 auf, die jedoch lediglich mit einer Platte an dem Zentral flansch 409 über einen Abstandshalter 411A und unter Zuhilfenahme einer Schraubenplatte 411B befestigt ist. Die Doppelplatte 425 ist radial außen miteinander durch eine Niet-, Lot- oder Schweißverbindung bzw. auf ähnliche Weise verbunden. Hierbei umgreift die primärseitige Doppelplatte 425 die Federn 427 von außen, während eine sekundärseitige Federplatte 433, die mit der Sekundärplatte 405 über Niete 435 vernietet ist, von innen an den Federn 427 anliegt. Die freie Federplatte 437 hingehend umgreift die Federn 427 von außen, so dass diesbezüglich die radialen Verhältnisse gegenüber dem Ausführungsbeispiel nach Figuren 1 und 2 umgekehrt sind.

Auch die Ausgestaltung des Dämpferteils 423 des Ausführungsbeispiels nach Figuren 10 und 11 unterscheidet sich von den übrigen Ausführungsbeispielen. Hierbei dient die an dem Zentralflansch 409 befestigte primärseitige Federplatte 425 als Anpress- und Reibfläche mit in Umfangrichtung variablem Axialabstand zur Sekundärmasse 405, auf welcher Keile 443 von der Sekundärmasse 405 mit einem gewissen Spiel in Umfangsrichtung verlagert werden können. Die Keile 443 werden über eine Anpressplatte 440 und eine Tellerfeder 441, die sich an der Sekundärplatte abstützt, gegen die primärseitige Federplatte 425 gepresst. Bei einer Drehverlagerung der beiden Massen 403 und 405 reiben die Keile mit einer von der axialen Position der primärseitigen Federplatte 425 abhängigen Reibkraft über die Federplatte 425, so dass mit einer gewünschten Kennlinie Energie dissipiert wird.

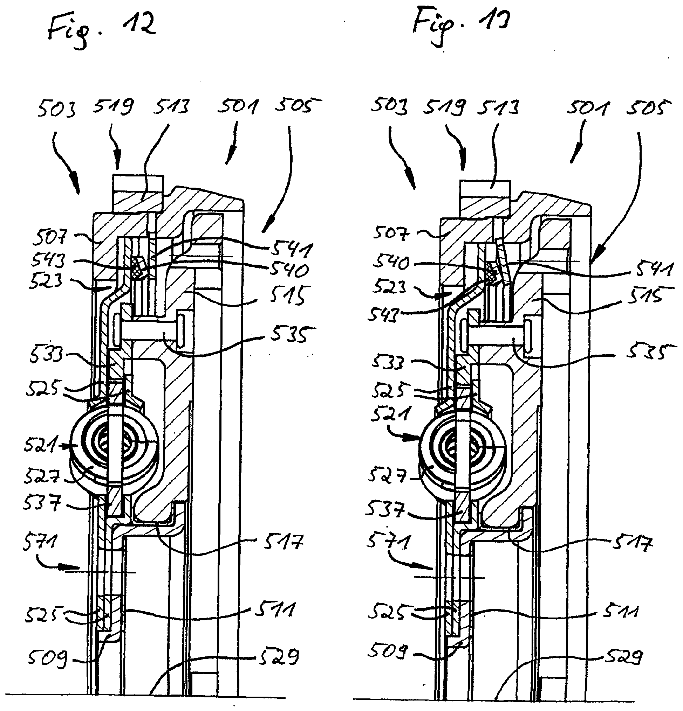

Auch die Anordnung nach Figuren 12 und 13 entspricht im Wesentlichen den vorbeschriebenen Anordnungen, so dass auf eine Detailerläuterung der einzelnen Baugruppen, insoweit sie mit bereits vorstehend beschriebenen Baugruppen übereinstimmen verzichtet und hierfür bis auf die erste Ziffer identische Bezugsziffern verwendet werden. Bei diesem Ausführungsbeispiel entspricht die radiale Anordnung von Federteil 521 und Dämpferteil 523 der Feder-Dämpfer-Einrichtung 519 im Wesentlichen der Ausführungsform nach Figuren 1 und 2, wobei auch der Aufbau des Federteils 521 des Ausführungsbeispiels nach Figuren 12 und 13 dem Aufbau des Federteils 121 des Ausführungsbeispiels nach Figuren 1 und 2 entspricht, so dass diesbezüglich auf eine Detailbeschreibung verzichtet wird. Auch die Befestigung der sekundärseitigen Federplatte 533 erfolgt über eine Nietverbindung 535. Des weiteren greift die sekundärseitige Federplatte 533 ebenso wie die sekundärseitige Federplatte 133 über einen Ansätze in Keile 543 des Dämpferteils 523 ein, welches jedoch ähnlich wie der Dämpferteil 432 des Ausführungsbeispiels nach Figuren 10 und 11 aufgebaut ist. Auch das Dämpferteil 523 umfasst eine axial variierende primärseitige Federplatte 525, auf welcher die Keile 543 reibend durch eine Anpressscheibe 540 gehalten sind. Die Anpressscheibe 540 wird von einer Tellerfeder 541 in Richtung auf die primäre Federscheibe 525 gedrückt, wodurch je nach Relativposition der beiden Massen 503 und 505 variierende Anpresskräfte und somit variierende Reibungskräfte in Abhängigkeit von der axialen Lage der primärseitigen Federplatte 525 bedingt sind, wie ein Vergleich der Figuren 12 und 13 (bzw. auch der Figuren 10 und 11) veranschaulicht.

Des weiteren umfast dieses Ausführungsbeispiel eine verhältnismäßig dünnwandige primärseitige Federplatte 525, welche einen primärseitigen Massering 507 mit dem Zahnkranz 513 trägt und axial nach außen bis in diesen Massering 507 hineinreicht. Dadurch dass die primärseitige Federplatte 525 verhältnismäßig dünnwandig ist, kann sie als Membran auch axiale Stöße eine Antriebswelle auffangen, während das Trägheitsmoment im Wesentlichen durch den Massering 507 und den Zahnkranz 513 bereitgestellt wird.

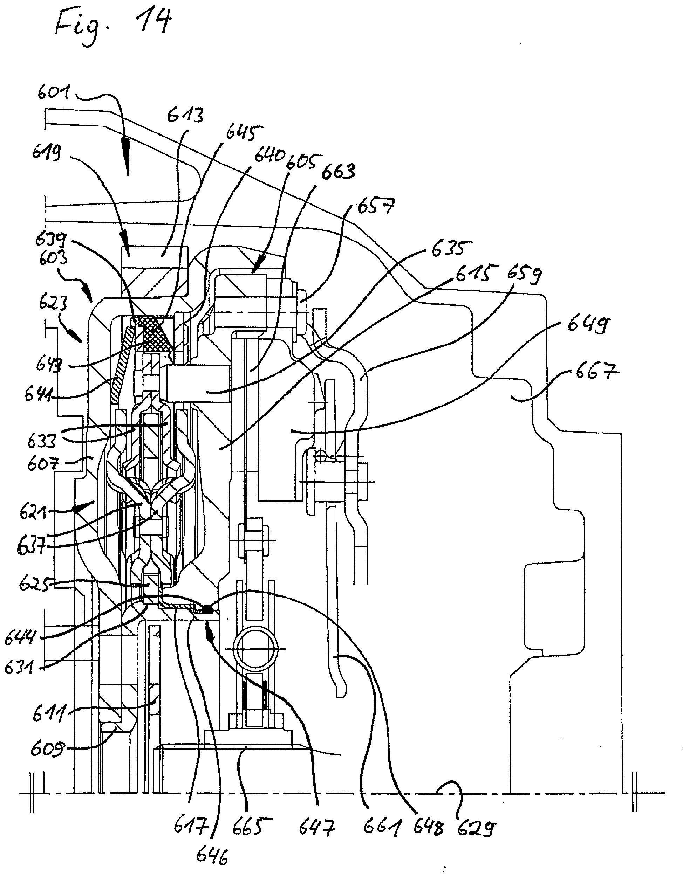

Das Ausführungsbeispiel nach Figur 14 entspricht im Wesentlichen dem Ausführungsbeispiel nach Figuren 3 bis 6, weswegen auch diesbezüglich auf eine Detailerläuterung der übereinstimmenden Baugruppen verzichtet wird, die mit bis auf die erste Ziffer identischen Bezugsziffern belegt sind.

Bei diesem Ausführungsbeispiel sind die sekundärseitige Doppelplatte 633 und die Sekundärplatte 615 über eine in der Sekundärplatte versenkte Nietverbindung 615 miteinander verbunden. Eine derartige Verbindung hat bei der Herstellung des Zweimassenkupplungsschwungrades den Vorteil, dass die Sekundärplatte 615 lediglich von einer Seite bearbeitet werden braucht. Insofern kann die Sekundärplatte 615 durch verhältnismäßig einfache Herstellverfahren, wie insbesondere Gießen, kostengünstig hergestellt werden, da sie lediglich von einer Seite nachbearbeitet werden braucht. Dieses ist lediglich der Flansch der Sekundärplatte 615 in dem Bereich, in dem das Gleitlager 617 vorgesehen ist. Dieses kann, wie unmittelbar aus Figur 14 ersichtlich, von der Motorseite bzw. von der Seite, die der Primärmasse 603 bzw. dem Motor zugewandt ist, geschehen. Beim anschließenden Vernieten über die Nieten 635 wird dann von dieser motorseitigen Lagerfläche, an der das Gleitlager 617 später angeordnet wird, das Maß für die Nietverbindung und somit die Lage zwischen Sekundärplatte 615 und sekundärseitiger Doppelplatte 633 gewonnen.

Zwischen der Sekundärplatte 615 und dem Zentralflansch 609 ist eine Klipsverbindung 647 vorgesehen, welche die Sekundärmasse 605 bezüglich der Primärmasse axial positioniert. Die Klipsverbindung 647 umfasst eine Baugruppe 646 des Zentralflansches 609, eine Nut 648 in der Sekundärplatte 615 sowie einen Kunststoffring 644, der in der Nut 648 angeordnet ist und von einer Nase der Baugruppe 646 umgriffen wird. Während somit das Gleitlager 617 die Sekundärmasse 605 und Primärmasse 603 gegen Kräfte, welche die beiden Massen 603 und 605 aufeinander zu bewegen, positioniert, positioniert die Klipsverbindung 647 die beiden Massen 603 und 605 gegen Axialkräfte, welche diese beiden voneinander wegbewegen. Hierbei ist unmittelbar ersichtlich, dass die Klipsverbindung 647 durch ausreichend große Axialkräfte bzw. durch Verbiegen der Baugruppen 646 nach radial innen geöffnet werden kann.

Bei einem Öffnen können das primärseitige Federblech 625, welches über eine in Umfangsrichtung wirksame Formschlussverbindung 631 zwischen dem Gleitlager 617 und einem Ansatz an dem Zentralflansch 609 axial gesichert ist, sowie das sekundärseitige Doppelblech 633 axial gemeinsam mit der Sekundärplatte 615 von der Primärmasse 603 entfernt werden, da sowohl die Verbindung 631 als auch die Öffnungen zwischen den Keilen 145 die Baugruppen 125 und 133 nicht daran hindern, axial von ihnen entfernt zu werden. Über die Nieten 635 sowie die freie Federplatte 637 sind diese Baugruppen hingegen axial bezüglich der Sekundärplatte 615 fixiert.

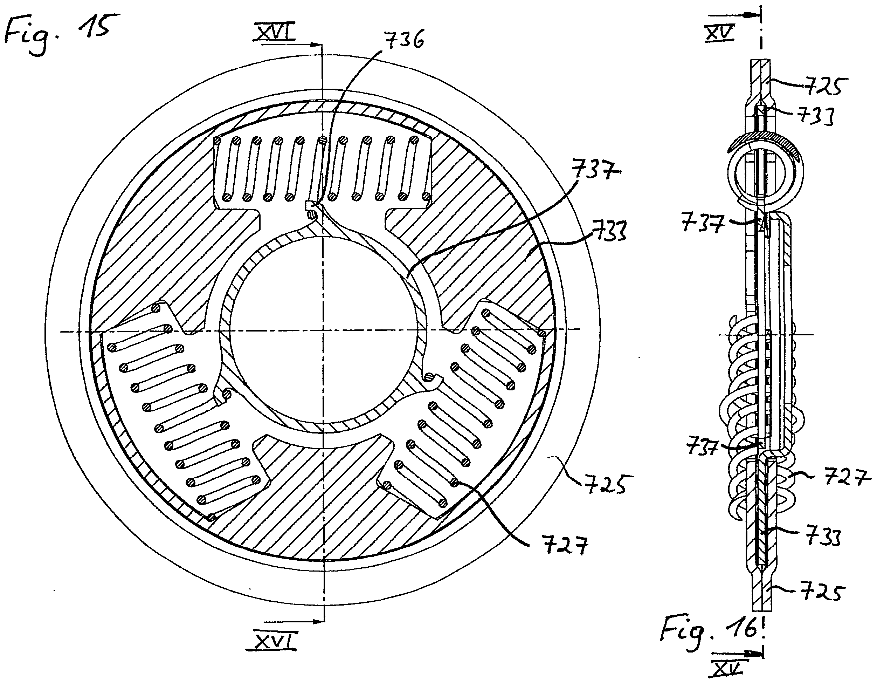

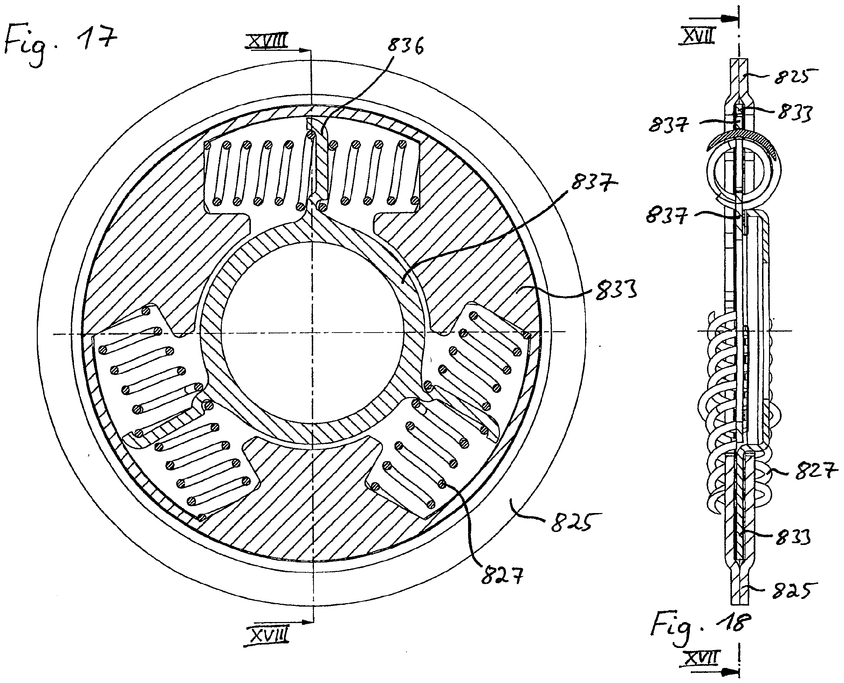

Die in den Figuren 15 bis 18 dargestellten Feder-Dämpfer-Anordnungen 719 und 819 weisen, entgegen der vorbeschriebenen Ausführungsbeispiele, die jeweils über die Niederhalter 136 bzw. 236 in Reihe geschaltet sind, durchgehende Federn 727 bzw. 827 auf, die durch an einem Flieger 737 bzw. 837 vorgesehene Niederhalter 736 bzw. 836 in ihrem mittleren Bereich fixiert sind. Damit diese Niederhalter 736 bzw. 836 gut in die Federn 727 bzw. 827 eingreifen können, weisen letztere in dem Bereich der Niederhalter 736 bzw. 836 versetzte Windungen auf, so dass die Niederhalter gut in die Federn eingreifen können. Wie anhand der Darstellung in Figur 17 ohne Weiteres ersichtlich, kann gegebenenfalls auf die versetzten Windungen verzichtet werden, wenn der Niederhalter 836 entsprechend kleiner und an den Federradius angepasst ausgebildet wird. Ansonsten umfassen auch diese Feder-Dämpfer-Anordnungen Primär- bzw. Sekundärplatten 725 und 825 sowie 733 und 833, welche die Federn 827 umgreifen und in Umfangsrichtung Anlageseiten für die Federn bilden.

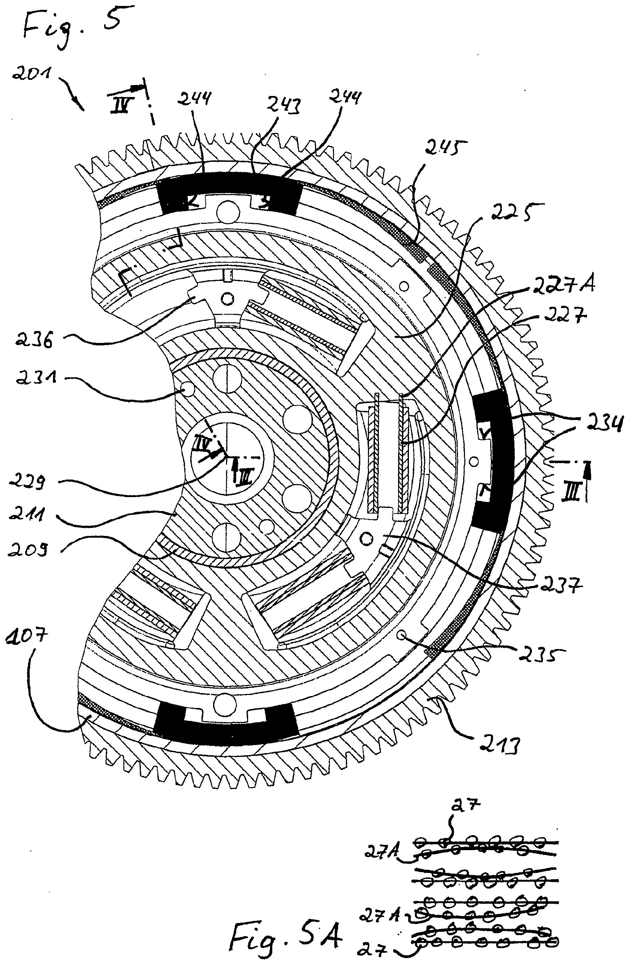

Wie in Figur 2 exemplarisch dargestellt, müssen die in Umfangsrichtung durch die Primärseite bzw. die Sekundärseite des Zweimassenkupplungsschwungrades vorgesehenen Räume für die Federn 127 (dort lediglich symbolisch als Doppellinien dargestellt) nicht übereinstimmen. Hierdurch kann auf einfache Weise bei kleinen Relativwinkeln zwischen den beiden Massen eine Leerlauffederkonstante bereitgestellt werden, die bei größeren Relativwinkeln zwischen den beiden Massen entsprechend der dann mitergriffenen Federn ansteigt. Gegebenenfalls brauchen auch lediglich eine oder zwei innere Federn 227A länger ausgebildet sein und in entsprechenden Ausnehmungen ruhen, wie in Figur 5 exemplarisch angedeutet. Es versteht sich, dass eine derartige Ausgestaltung der Federteile auch unabhängig von den übrigen Merkmalen vorliegender Erfindung vorteilhaft ist.

Um die Reibungsverluste bei Federanordnungen mit mehreren ineinander angeordneten Federn, wie diese beispielhaft in Figur 5 angedeutet sind, zu minimieren, können die inneren Federn bauchig ausgebildet sein, wie Figur 5A beispielhaft darstellt. Selbst unter Fliehkraft liegen dann lediglich wenige Windungen der inneren Federn 27A an der oder den äußeren Federn 27 an, so dass durch Reibung zwischen den Federn 27 und 27A bedingte Verluste vermieden werden. Es versteht sich, dass eine derartige Ausgestaltung der Federn auch unabhängig von den übrigen Merkmalen vorliegender Erfindung zur funktionalen Trennung von Federteil und Dämpferteil bei einem Torsionsschwingungsdämpfer und insbesondere bei einem Zweimassenkupplungsschwungrad vorteilhaft ist.

Je nach konkreten Erfordernissen können bei der Verwendung von ineinanderliegenden Federn lediglich die inneren Federn durchgehen ausgebildet sein, während die äußeren Federn geteilt und über einen Niederhalter erfasst sind. Vorzugsweise sind hierbei die innenliegenden Federn entweder ebenfalls von einem Niederhalter erfasst oder bauchig ausgebildet, um eine Reibung zwischen den Federn zu minimieren.

Wie bereits aus den vorstehend beschriebenen Ausführungsbeispielen ersichtlich, können die Dämpferteile verschieden Reibeinrichtungen aufweisen. Vorzugsweise sind Reibeinrichtungen mit Reibflächen die eine axiale Komponente haben vorgesehen, das heißt, dass die entsprechenden Reibflächen eine Oberfläche haben, deren Normalenvektor eine axiale Komponente aufweist. Dieses ist vorteilhaft, da axial ausgerichtete Flächen von der Fliehkraft unabhängig aufeinander reiben.

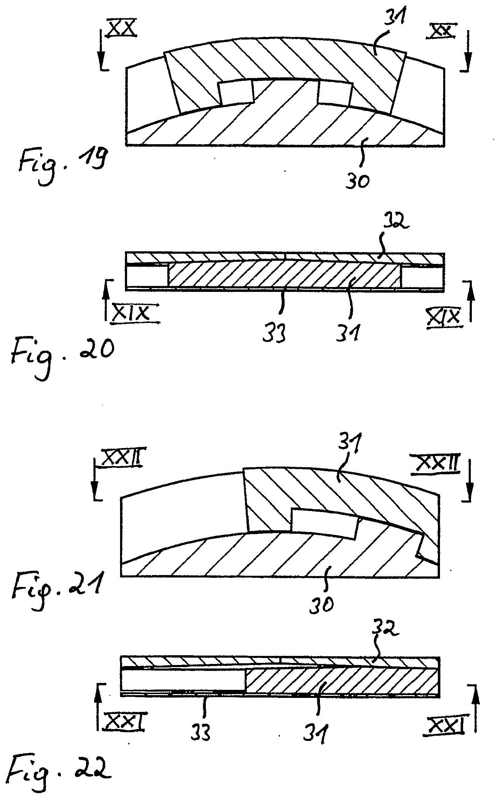

Die in den Figuren 19 bis 22 dargestellte Reibeinrichtung umfasst wenigstens einen Reibkeil 31 mit einer Ausnehmung, in welche eine Drehmoment übertragende Baugruppe 30, wie beispielsweise eine Baugruppe der Primärmasse oder der Sekundärmasse bzw. eine primärseitige oder sekundärseitige Federplatte oder ähnliches, eingreift. Nach einem gewissen Leerlaufwinkel schlägt die Baugruppe 30 an dem Reibkeil 31 an und nimmt diesen mit. Der Reibkeil 31 ist darüber hinaus mit einer Tellerfeder 33 fest verbunden, welche den Reibkeil 31 gegen einen Reibrampenring 32 drückt. Durch die feste Verbindung zwischen Reibkeil 31 und Tellerfeder 33 sind alle aufeinander reibenden Baugruppen hinsichtlich ihrer Fliehkräfte über den Umfang kompensiert.

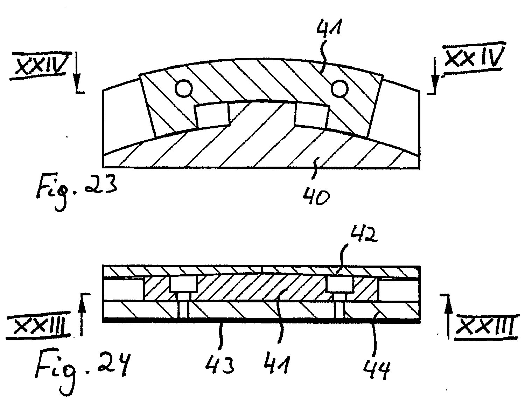

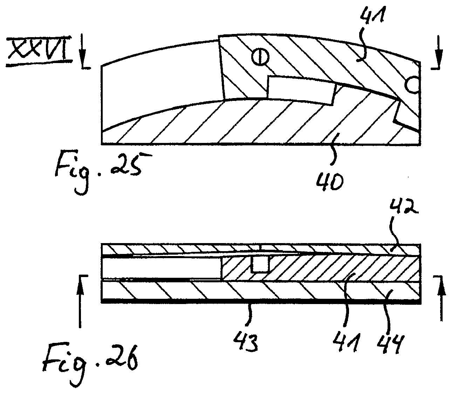

Die Ausführungsform nach Figuren 23 bis 26 entspricht im wesentlichen der Ausführungsform nach Figuren 19 bis 22, wobei jedoch die Reibkeile 41 an einem Anpressring 43 befestigt sind, wodurch abermals Fliehkräfte kompensiert werden. Darüber hinaus kann durch den Anpressring 43 eine gleichförmigere Belastung der Reibkeile 41 gewährleistet werden.

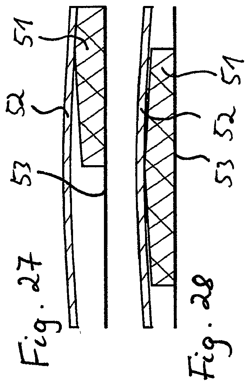

Während die Reibkeile 31 und 41 vorzugsweise aus einem Reibbelagmaterial gebildet sind, können die Rampenringe 32 und 42 sowohl aus Reibbelagmaterial als auch metallisch ausgebildet sein. Bei dem Ausführungsbeispiel nach Figuren 27 und 28 ist insbesondere ein Bleich 52 mit einer eingeprägten Reibrampe vorgesehen, gegen welches die Reibkeile 51 durch eine fest mit den Reibkeilen 51 verbundene Tellerfeder 53 gepresst werden. Eine ähnliche Anordnung zeigen auch die Ausführungsbeispiele nach Figuren 10 bis 13, bei denen die primärseitige Anpressplatte 425 bzw. 525 mit Reibrampen für die Keile 443 bzw. 543 ausgestaltet sind.

Andererseits kann auch eine Tellerfeder wellenförmig bzw. mit Rampen oder Reibrampen ausgeformt werden, um entsprechend variierende Anpresskräfte im Zusammenspiel mit weiteren Rampen bzw. Keilen zu erzeugen.

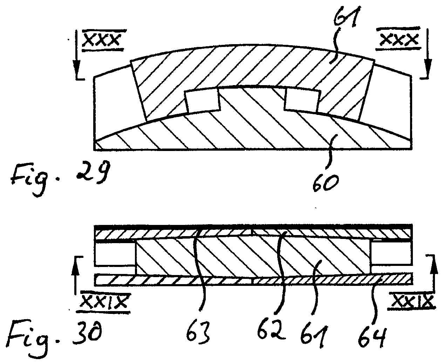

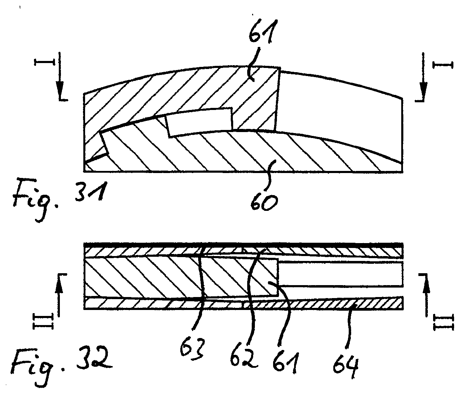

Wie anhand des in Figuren 29 bis 32 ersichtlich, kann auch ein Doppelkeil 61 vorgesehen sein, der zwischen zwei Rampenringen 62 und 64 angeordnet ist und über eine Tellerfeder 63 verspannt wird, wobei die Rampenringe 62 und 64 gleichzeitig als Anpressplatte fungieren. Insbesondere aus diesem Ausführungsbeispiel wird ersichtlich, dass gegebenenfalls statt des Spiels zwischen den Baugruppen 60 und 61 auch in den Rampenringen ein Bereich ohne axialer Steigung um eine Leerlaufposition vorgesehen sein kann, in welchem die Keile leicht verschiebbar sind. In der Regel wird jedoch wegen der vorhandenen Reibbeläge die Reibung bei letztere Ausführungsform für eine Leerlaufentkopplung zu groß sein.

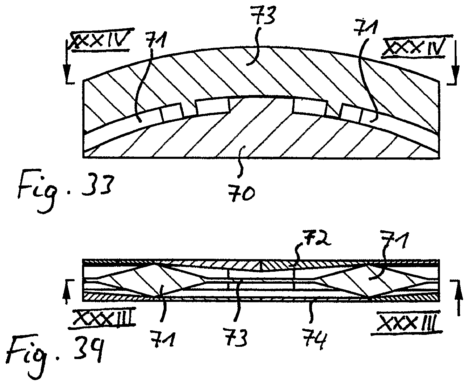

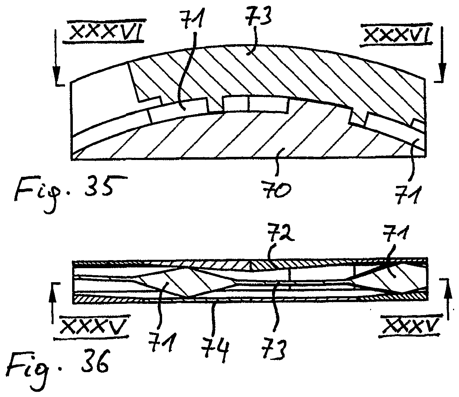

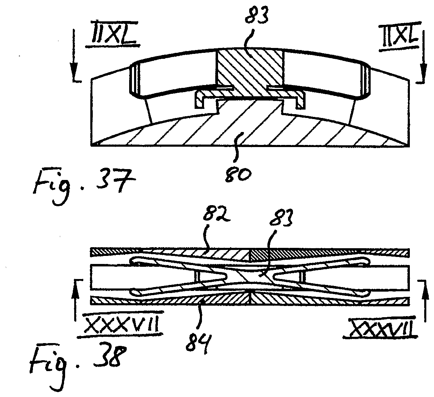

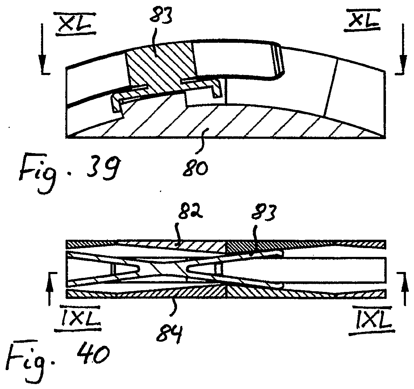

Wie insbesondere den Ausführungsbeispielen nach Figuren 33 bis 40 entnehmbar, braucht die Tellerfeder nicht primärseitig oder sekundärseitig vorgesehen sein. Sie kann vielmehr ein fliegendes Bauteil sein, welches beispielsweise mit Reibkeilen 71 festverbunden ist, wie dieses insbesondere Figuren 33 bis 36 zeigen. Hier sind zwei Rampenringe 72 und 74 vorgesehen, während die Tellerfeder 73 zwischen diesen Rampenringen 72 und 74 fliegend gelagert ist und die Keile 71 trägt. Bei einem Verdrehen der beiden Massen und mithin bei einem Verdrehen der beiden Rampenringe 72 und 74 erfassen diese die Keile 71 und lenken diese aus der Federebene der Tellerfeder 73 aus, wodurch Rückstellkräfte bedingt sind, wie in Figuren 35 und 36 angedeutet. Bei diesem Ausführungsbeispiel sind die Rampenringe 72 und 74 vorzugsweise metallisch, während die Reibkeile 71 vorzugsweise aus einem Reibmaterial bestehen und an die Tellerfeder 73 angesetzt sind. Andererseits können die Reibkeile auch einstückig mit der Tellerfeder ausgebildet sein, wobei dann die Rampenringe aus Reibmaterial bestehen können. Insbesondere wenn letzteres der Fall ist, können statt einer Tellerfeder auch Federkörper 83 vorgesehen sein, die mit Federarmen an den Rampen der Rampenringe 82 bzw. 84 reiben können, wie in den Figuren 37 bis 40 beispielhaft dargestellt.

Die in Figuren 19 bis 40 dargestellten Reibeinrichtungen weisen Reibflächen auf, die im wesentlichen axial ausgerichtet ist, wie aus diesen Figuren unmittelbar ersichtlich. Insbesondere variieren die Reibflächen über den Umfang in ihrer axialen Position, um entsprechend variierende, vorzugsweise durch eine Federkraft vorgegebene Anpresskräfte und somit Reibungskräfte bereitzustellen, so dass ohne weiteres eine vom relativen Verdrehwinkel abhängige Kennlinie erzielt werden kann.

## Patentansprüche

1. Zweimassenkupplungsschwungrad, welches um eine Hauptrotationsachse rotieren kann und zwei Massen sowie einen Torsionsschwingungsdämpfer umfasst, der in der Lage ist Rotationsschwingungen über eine zwischen den beiden Massen wirksame Feder-Dämpfer-Einrichtung mit einem Federsystem und eine Dämpfersystem zu dämpfen, wobei in einem lastfreien Zustand die beiden Massen in einer Leerlaufposition um die Hauptrotationsachse rotieren können und in belastetem Zustand gegen die Feder-Dämpfer-Einrichtung um einen Relativwinkel relativ zueinander verdreht um die Hauptrotationsachse rotieren können, **dadurch gekennzeichnet, dass** das Federsystem geradlinige Federn (127; 227; 727; 827) aufweist, die über über einen Fliegerring miteinander verbundene Niederhalter (136, 236) radial zur Hauptrotationsachse hin geführt und derart in Reihe geschaltet sind, dass sie unter Betriebsbedingungen radial außen an relativ bezüglich der Federn (127; 227; 727; 827) sich bewegenden Baugruppen (125, 133; 225, 233; 725, 733; 825,833) nicht reiben.

2. Zweimassenkupplungsschwungrad nach Anspruch 1, **dadurch gekennzeichnet, dass** der Fliegerring zumindest um einen kleinen Leerlaufrelativwinkel um die Leerlaufposition frei den Federn folgen kann.

3. Zweimassenkupplungsschwungrad nach einem der vorstehenden Ansprüche, **dadurch gekennzeichnet, dass** das Federsystem im Vergleich zu einem Dämpfersystem der Feder-Dämpfer-Einrichtung weniger als 20%, insbesondere weniger als 10%, der Maximalreibung der Feder-Dämpfer-Einrichtung aufbringt.

4. Zweimassenkupplungsschwungrad nach einem der vorstehenden Ansprüche, **dadurch gekennzeichnet, dass** das Federsystem (121; 221; 421) und das Dämpfersystem (123; 223; 423) der Feder-Dämpfer-Einrichtung (119; 219; 419) auf unterschiedlichen Radien von der Hauptrotationsachse (129; 229, 429) angeordnet sind.

5. Zweimassenkupplungsschwungrad nach Anspruch 4, **dadurch gekennzeichnet, dass** das Dämpfersystem (123; 223) radial außen angeordnet ist.

6. Zweimassenkupplungsschwungrad nach einem der vorstehende Ansprüche, **dadurch gekennzeichnet, dass** das Platten (125; 233), die Drehmoment von einer der beiden Massen (103; 205) auf eine Feder-Dämpfer-Einrichtung (119; 219) übertragen und doppelt ausgebildet sind, mit gleicher Stärke aus identischem Material ausgestaltet sind.

7. Zweimassenkupplungsschwungrad nach Anspruch 6, **dadurch gekennzeichnet, dass** das die beiden Platten (125; 233) symmetrisch sind.

8. Zweimassenkupplungsschwungrad nach einem der vorstehende Ansprüche, **dadurch gekennzeichnet, dass** das eine fliegende Federplatte (137; 337) mit gleicher Stärke aus identischem Material wie eine primärseitige oder die sekundärseitige Platte (133; 333), die Drehmoment von einer der beiden Massen (105) auf eine Feder-Dämpfer-Einrichtung (119) überträgt, ausgebildet ist.

9. Zweimassenkupplungsschwungrad nach einem der vorstehende Ansprüche, **dadurch gekennzeichnet, dass** sich Baugruppen, an welchen die Federn anliegen, von denen sie jedoch im Rahmen einer Relativbewegung der beiden Massen eines Zweimassenkupplungsschwungrades in Umfangsrichtung abheben, von der an den Federn anliegenden Seite ausgehend sich in Richtung auf die Federn an ihrer radial außen liegenden Seite aufweiten, so dass diese sich bei einer Relativbewegung der beiden Massen an der Seite, an der diese Baugruppen von den Federn abheben, radial außen von den Federn entfernen.

10. Zweimassenkupplungsschwungrad nach Anspruch 9, **dadurch gekennzeichnet, dass** das an der Anlagenseite noch ein Sattel vorgesehen ist, an dem die Federn radial stabil geführt anliegen können.

11. Zweimassenkupplungsschwungrad nach einem der vorstehende Ansprüche, **dadurch gekennzeichnet, dass** eine primärseitige Federplatte (525) als Membran ausgestaltet ist.

12. Zweimassenkupplungsschwungrad nach einem der vorstehende Ansprüche, **dadurch gekennzeichnet, dass** eine ein Drehmoment in Richtung Primärmasse (603) übertragende Baugruppe (633) der Sekundärmasse (605) mit der Sekundärplatte (605) über eine in der Sekundärplatte (605) versenkte Nietverbindung (635) miteinander verbunden ist.

13. Zweimassenkupplungsschwungrad nach einem der vorstehenden Ansprüche, **dadurch gekennzeichnet, dass** die Sekundärplatte (605) lediglich von einer Seite, vorzugsweise von ihrer der Primärmasse (603) zugewandten Seite, bearbeitet ist.

14. Zweimassenkupplungsschwungrad nach einem der vorstehende Ansprüche, **dadurch gekennzeichnet, dass** die Niederhalter (736, 836) jeweils in eine Feder (727, 827) eingreifen und/oder diese von innen durchgreifen.

15. Zweimassenkupplungsschwungrad nach einem der vorstehende Ansprüche, **dadurch gekennzeichnet, dass** es Federanordnungen mit mehreren ineinander angeordneten Federn (27, 27A) umfasst, wobei die inneren Federn (27A) bauchig ausgebildet sind.

16. Kupplung mit einem Zweimassenkupplungsschwungrad nach einem der vorstehenden Ansprüche und mit einer Anpressplatte und einer von der Anpressplatte und dem Zweimassenkupplungsschwungrad erfassbaren Reibscheibe.

## Claims

1. A dual-mass clutch flywheel, which can rotate about a main rotation axis and comprises two masses and a torsional vibration damper, which can damp rotational vibrations via a spring-damper device, which is effective between the two masses and has a spring system and a damper system, the two masses being able to rotate about the main rotation axis in an idle position when in a load-free state and being able to rotate about the main rotation axis at a relative angle to each other when in a loaded state against the spring-damper device, **characterised in that** the spring system has straight springs (127; 227; 727; 827), which are guided radially towards the main rotation axis via holders (136, 236), which are connected to one another via a floating ring, and are connected in series in such a manner that, under operating conditions, they do not rub on the radially outer side against assemblies (125, 133; 225, 233; 725, 733; 825, 833) moving relative to the springs (127; 227; 727; 827) .

2. The dual-mass clutch flywheel according to Claim 1, **characterised in that** the floating ring can freely follow the springs at least at a small idle relative angle about the idle position.

3. The dual-mass clutch flywheel according to any one of the preceding claims, **characterised in that** the spring system applies less than 20 %, in particular less than 10 %, of the maximum friction of the spring-damper device in comparison with a damper system of the spring-damper device.

4. The dual-mass clutch flywheel according to any one of the preceding claims, **characterised in that** the spring system (121; 221; 421) and the damper system (123; 223; 423) of the spring-damper device (119; 219; 419) are arranged at different radii from the main rotation axis (129; 229, 429).

5. The dual-mass clutch flywheel according to Claim 4, **characterised in that** the damper system (123; 223) is arranged radially to the outside.

6. The dual-mass clutch flywheel according to any one of the preceding claims, **characterised in that** plates (125; 233), which transmit torque from one of the two masses (103; 205) to a spring-damper device (119; 219) and of which two are provided, are made in the same thickness and from identical material.

7. The dual-mass clutch flywheel according to Claim 6, **characterised in that** the two plates (125; 233) are symmetrical.

8. The dual-mass clutch flywheel according to any one of the preceding claims, **characterised in that** a floating spring plate (137; 337) is designed with the same thickness as and from identical material to a primary-side or the secondary-side plate (133; 333), which transmits torque from one of the two masses (105) to a spring-damper device (119).

9. The dual-mass clutch flywheel according to any one of the preceding claims, **characterised in that** assemblies against which the springs bear but from which they lift off in the circumferential direction when there is a relative movement of the two masses of a dual-mass clutch flywheel widen on their radially outer side in the direction of the springs from the side bearing against the springs, so that they move away in the radially outward direction from the springs on the side on which said assemblies lift off from the springs when there is a relative movement of the two masses.

10. The dual-mass clutch flywheel according to Claim 9, **characterised in that** on the bearing side there is also a saddle against which the springs can bear in a radially stably guided manner.

11. The dual-mass clutch flywheel according to any one of the preceding claims, **characterised in that** a primary-side spring plate (525) is in the form of a diaphragm.

12. The dual-mass clutch flywheel according to any one of the preceding claims, **characterised in that** an assembly (633) of the secondary mass (605) which transmits a torque in the direction of the primary mass (603) is connected to the secondary plate (605) via a rivet connection (635) recessed in the secondary plate (605).

13. The dual-mass clutch flywheel according to any one of the preceding claims, **characterised in that** the secondary plate (605) is machined only from one side, preferably from its side facing the primary mass (603) .

14. The dual-mass clutch flywheel according to any one of the preceding claims, **characterised in that** the holders (736, 836) each engage in a spring (727, 827) and/or fit through them from the inside.

15. The dual-mass clutch flywheel according to any one of the preceding claims, **characterised in that** it comprises spring arrangements having multiple springs (27, 27A) arranged inside one another, wherein the inner springs (27A) are bulged.

16. A clutch having a dual-mass clutch flywheel according to any one of the preceding claims, and having a pressure plate and a friction disc which can be held by the pressure plate and the dual-mass clutch flywheel.

## Revendications

1. Volant d'inertie à deux masses d'un embrayage, lequel est susceptible de tourner autour d'un axe de rotation principal et comprend deux masses, ainsi qu'un amortisseur de vibrations de torsion qui est en mesure d'amortir des vibrations de torsion par l'intermédiaire d'un système amortisseur à ressort agissant entre les deux masses, pourvu d'un système de ressort et d'un système amortisseur, dans un état exempt de charge, les deux masses pouvant tourner dans une position de marche au ralenti autour de l'axe de rotation principal et dans l'état soumis à charge, pouvant tourner autour de l'axe de rotation principal contre le système amortisseur à ressort, en étant tournées de la valeur d'un angle relatif l'une par rapport à l'autre, **caractérisé en ce que** le système de ressort comporte des ressorts (127 ; 227 ; 727 ; 827) rectilignes, qui par l'intermédiaire de serre-flans (136, 236) reliés l'un à l'autre via une bague volante sont guidés en direction radiale vers l'axe de rotation principal et sont montés en série de sorte à ne pas frotter dans des conditions de service en direction radiale vers l'extérieur contre des modules (125, 133 ; 225, 233 ; 725, 733 ; 825,833) qui se déplacent par rapport aux ressorts (127 ; 227 ; 727 ; 827) .

2. Volant d'inertie à deux masses d'un embrayage selon la revendication 1, **caractérisé en ce que** l'anneau volant peut suivre librement les ressorts au moins autour d'un petit angle relatif de marche au ralenti autour de la position de marche au ralenti.

3. Volant d'inertie à deux masses d'un embrayage selon l'une quelconque des revendications précédentes, **caractérisé en ce qu'**en comparaison d'un système amortisseur du système amortisseur à ressort, le système de ressort génère moins de 20 %, notamment moins de 10 % du frottement maximal du système amortisseur à ressort.

4. Volant d'inertie à deux masses d'un embrayage selon l'une quelconque des revendications précédentes, **caractérisé en ce que** le système de ressort (121 ; 221 ; 421) et le système amortisseur (123 ; 223 ; 423) du système amortisseur à ressort (119 ; 219 ; 419) sont placés à différents rayons de l'axe de rotation principal (129 ; 229,429).

5. Volant d'inertie à deux masses d'un embrayage selon la revendication 4, **caractérisé en ce que** le système amortisseur (123 ; 223) est placé à l'extérieur en direction radiale.

6. Volant d'inertie à deux masses d'un embrayage selon l'une quelconque des revendications précédentes, **caractérisé en ce que** des plaques (125 ; 233) qui transmettent le couple de rotation de l'une des deux masses (103 ; 205) sur un système amortisseur à ressort (119 ; 219) et qui sont réalisées en double sont conçues avec une même épaisseur en une matière identique.

7. Volant d'inertie à deux masses d'un embrayage selon la revendication 6, **caractérisé en ce que** les deux plaques (125 ; 233) sont symétriques.

8. Volant d'inertie à deux masses d'un embrayage selon l'une quelconque des revendications précédentes, **caractérisé en ce qu'**une plaque à ressort volante (137 ; 337) est conçue avec la même épaisseur et en une matière identique qu'une plaque côté primaire ou que la plaque côté secondaire (133 ; 333), qui transmet le couple de rotation de l'une des deux masses (105) sur un système amortisseur à ressort (119).

9. Volant d'inertie à deux masses d'un embrayage selon l'une quelconque des revendications précédentes, **caractérisé en ce que** des modules sur lesquels les ressorts s'appuient, mais dont ils se soulèvent pourtant dans la direction périphérique dans le cadre d'un déplacement relatif des deux masses d'un volant d'inertie à deux masses d'un embrayage s'élargissent à partir du côté d'appui sur les ressorts dans la direction vers les ressorts sur leur côté situé à l'extérieur en direction radiale, de telle sorte que lors d'un déplacement relatif des deux masses sur le côté sur lequel lesdits modules se soulèvent des ressorts, ils s'éloignent des ressorts, en direction radiale vers l'extérieur.

10. Volant d'inertie à deux masses d'un embrayage selon la revendication 9, **caractérisé en ce que** sur le côté d'appui est encore prévue une selle sur laquelle les ressorts peuvent s'appuyer en étant guidés de manière stable en direction radiale.

11. Volant d'inertie à deux masses d'un embrayage selon l'une quelconque des revendications précédentes, **caractérisé en ce qu'**une plaque à ressort (525) côté primaire est conçue sous la forme de membrane.

12. Volant d'inertie à deux masses d'un embrayage selon l'une quelconque des revendications précédentes, **caractérisé en ce qu'**un module (633) de la masse secondaire (605) transmettant un couple de rotation dans la direction de la masse primaire (603) est relié avec la plaque secondaire (605) par l'intermédiaire d'un assemblage riveté (635) noyé dans la plaque secondaire (605).

13. Volant d'inertie à deux masses d'un embrayage selon l'une quelconque des revendications précédentes, **caractérisé en ce que** la plaque secondaire (605) est usinée uniquement par un côté, de préférence par le son côté qui fait face à la masse primaire (603).

14. Volant d'inertie à deux masses d'un embrayage selon l'une quelconque des revendications précédentes, **caractérisé en ce que** les serre-flans (736, 836) s'engagent chacun dans un ressort (727, 827) et/ou traversent ces derniers par l'intérieur.

15. Volant d'inertie à deux masses d'un embrayage selon l'une quelconque des revendications précédentes, **caractérisé en ce qu'**il comprend des agencements de ressort pourvus de plusieurs ressorts (27, 27A) placés les uns dans les autres, les ressorts (27A) internes étant conçus de forme bombée.

16. Embrayage, doté d'un volant d'inertie à deux masses d'un embrayage selon l'une quelconque des revendications précédentes et doté d'un plateau de pression et d'un disque de friction pouvant être saisi par le plateau de pression et le volant d'inertie à deux masses d'un embrayage.
